(19) Europäisches Patentamt / European Patent Office / Office européen des brevets

(11) **EP 4 203 591 B1**

(12) **FASCICULE DE BREVET EUROPEEN**

(45) Date de publication et mention de la délivrance du brevet:
**27.03.2024 Bulletin 2024/13**

(21) Numéro de dépôt: **22213978.4**

(22) Date de dépôt: **15.12.2022**

(51) Classification Internationale des Brevets (IPC):
**H04W 72/121** (2023.01)   **H04W 84/18** (2009.01)
**H04W 72/54** (2023.01)

(52) Classification Coopérative des Brevets (CPC):
**H04W 72/121;** H04W 72/542; H04W 84/18

(54) **PROCÉDÉ ET SYSTÈME D'ORDONNANCEMENT DES TRANSMISSIONS DANS UN RÉSEAU DE RADIOCOMMUNICATION AD HOC**

VERFAHREN UND SYSTEM ZUR PLANUNG VON ÜBERTRAGUNGEN IN EINEM AD-HOC-FUNKKOMMUNIKATIONSNETZ

METHOD AND SYSTEM FOR SCHEDULING TRANSMISSIONS IN AN AD HOC RADIO COMMUNICATION NETWORK

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **21.12.2021 FR 2114057**

(43) Date de publication de la demande:
**28.06.2023 Bulletin 2023/26**

(73) Titulaires:
- **THALES**
  **92190 Meudon (FR)**
- **Centre National de la Recherche Scientifique**
  **75016 Paris (FR)**
- **CentraleSupélec**
  **91190 - Gif sur Yvette (FR)**
- **Université Paris-Saclay**
  **91190 Gif-sur-Yvette (FR)**

(72) Inventeurs:
- **JIA, David**
  **92622 Gennevilliers Cedex (FR)**
- **LE MARTRET, Christophe**
  **92622 Gennevilliers Cedex (FR)**
- **LETURC, Xavier**
  **92622 Gennevilliers Cedex (FR)**

- **ASSAAD, Mohamad**
  **91192 Gif-sur-Yvette (FR)**

(74) Mandataire: **Atout PI Laplace**
**Immeuble "Visium"**
**22, avenue Aristide Briand**
**94117 Arcueil Cedex (FR)**

(56) Documents cités:
**US-A1- 2005 152 291    US-A1- 2017 111 905**

- **SASTRY KOMPELLA ET AL: "On optimal SINR-based scheduling in multihop wireless networks", IEEE /ACM TRANSACTIONS ON NETWORKING, IEEE / ACM, NEW YORK, NY, US, vol. 18, no. 6, 1 décembre 2010 (2010-12-01), pages 1713-1724, XP058194437, ISSN: 1063-6692, DOI: 10.1109/TNET.2010.2048338**
- **GAVEAU JEROME ET AL: "Grouping of subcarriers and effective SNR statistics in wideband OFDM systems using EESM", 2017 IEEE 13TH INTERNATIONAL CONFERENCE ON WIRELESS AND MOBILE COMPUTING, NETWORKING AND COMMUNICATIONS (WIMOB), IEEE, 9 octobre 2017 (2017-10-09), pages 1-7, XP033261398, DOI: 10.1109/WIMOB.2017.8115800**

EP 4 203 591 B1

**Description**

**Domaine technique :**

L'invention se situe dans le domaine des réseaux de communication sans fil ad hoc de noeuds. Souvent dans ces réseaux, les noeuds sont rassemblés en entités appelées clusters, par configuration ou dynamiquement, communiquant entre eux sur des ressources spectrales qui leur sont allouées.

**Technique antérieure :**

La ressource spectrale étant limitée, il est nécessaire de réutiliser spatialement les fréquences/canaux de communication (il y a moins de canaux de communication que de clusters), ce qui crée de l'interférence. Des solutions existantes (appelées « coloration ») consistent à allouer les mêmes canaux de communication à différents clusters en s'assurant que les interférences endogènes créées ne sont pas destructrices pour le fonctionnement du réseau. Parmi ces solutions de coloration, le TEL (en anglais, Trial-and-Error Learning) consiste à allouer de manière distribuée et dynamique des canaux sur un critère de maximisation d'une fonction d'utilité basée sur le niveau d'interférence reçu. L'algorithme du TEL converge vers des solutions pour lesquelles on va réutiliser des canaux dans des clusters « éloignés », ce qui minimise l'effet des interférences endogènes. Cependant, cette solution reste aussi limitée : si le nombre de canaux reste trop faible par rapport au nombre de clusters à servir, des clusters proches peuvent recevoir les mêmes canaux de communication induisant des interférences néfastes au fonctionnement du réseau.

Une solution alternative à la coloration consiste à associer des clusters adjacents entre eux, puis à appliquer des méthodes de gestion d'interférence entre ces clusters. Par exemple, une solution simple consisterait à réaliser un accès multiple par répartition temporelle en français (TDMA, en anglais Time Division Multiple Access) entre deux clusters adjacents sur le même canal de communication, c.-à-d. l'émission provient d'un seul cluster à la fois sur le canal de communication. Le prix à payer de cette façon de gérer la pénurie de canaux de communication est que le débit est divisé par deux.

Toutefois, il existe des méthodes récentes de gestion des interférences qui permettent de faire mieux que le TDMA, c'est-à-dire mieux qu'une réduction du débit inférieure à 50%. Parmi elles, le TIM (en anglais Topological interférence Management) est une méthode qui consiste à éliminer les interférences fortes à la réception et à accepter de subir les interférences faibles. Cette méthode nécessite d'identifier ces interférences fortes ou faibles dont l'ensemble est appelé « un graphe d'interférence » (cf. [1]).

L'application du TIM nécessite que chaque noeud soit en mesure de distinguer les interférents forts des interférents faibles. Plus précisément, il est nécessaire pour chaque lien entre un noeud émetteur $j$ et un noeud récepteur $i$ du réseau ad hoc d'être en mesure de dire si l'interférence créée par un noeud interférent $k \neq i, j$ est forte ou faible. Ce problème sera désigné par la suite par la dénomination « apprentissage du graphe d'interférence »

On définit $SINR_{j \to i,k}$ qui est le rapport Signal à bruit plus interférence instantané, (en anglais : Signal to Noise plus interférence Ratio), en réception du noeud $i$ pour une transmission utile du noeud $j$ vers le noeud $i$, avec comme interférent le noeud $k$, qui peut s'écrire comme suit :

$$\mathrm{SINR}_{j \to i,k} = \frac{P_j \left| h_{ij} \right|^2}{P_{noise} + P_k \left| h_{ik} \right|^2}$$

où $P_j$ est la puissance transmise par $j$, $h_{ij}$ est une réalisation du canal de propagation d'atténuation aléatoire complexe, qui correspond à la fois aux évanouissements à grande échelle (« large-scale fading ») et ceux à petite échelle (« small-scale fading ») du lien $j$ vers i et $P_{noise}$ représente la puissance du bruit.

L'apprentissage du graphe d'interférence revient à être en mesure de déterminer si l'interférence induite par le noeud $k$ sur le lien entre les noeuds $i$ et $j$ est faible ou forte. Pour ce faire, une approche connue est de décider qu'une interférence est faible si le SINR instantanée est inférieur à un seuil, c.-à-d. de décider que l'interférence induite par le noeud $k$ sur le lien $j \to i$ est faible si $SINR_{j \to i,k} < \Gamma_0$ et forte si $SINR_{j \to i,k} >_- \Gamma_0$, avec $\Gamma_0$ un seuil de SINR. Toutefois, les coefficients de canal de propagation $h_{ij}$ et $h_{ik}$ dans la formule du SINR instantanée sont des variables aléatoires, et cette approche basée sur le SINR instantanée est sensible aux fluctuations dans le temps du canal.

SASTRY KOMPELLA ET AL: "On optimal SINR-based scheduling in multihop wireless networks", IEEE, 1 décembre 2010 dévoile une solution d'ordonnancement de longueur minimale qui satisfait certaines demandes de trafic dans un réseau des noeuds sans fil.

US 2017/111905 A1 dévoile, dans un réseau ad-hoc, où les noeuds utilisent des antennes directionnelles, la détermination d'un ordonnancement où à l'issue de l'ordonnancement chaque noeud aura reçu un signal de tous les noeuds du réseau. L'ordonnancement commence par diviser les noeuds du réseau en 2 groupes, les noeuds du groupe1 transmettent des signaux vers un noeud du groupe2 et ensuite on change de direction, i.e. les noeuds du groupe2 envoient des signaux vers un noeud du groupe1 ; permuter les noeuds du groupe1 et itérer les étapes ci-dessus jusqu'à 'à ce que tous les noeuds du groupe1 auront envoyé des signaux vers tous les noeuds du groupe2.

**Résumé de l'invention :**

Aussi, selon un aspect de l'invention, dans un mode de réalisation, il apparaît plus pertinent de décider qu'une interférence est faible ou forte en se basant sur un critère probabiliste sur le SINR, c'est-à-dire de décider si l'interférence est forte si $P(\text{SINR}_{j \to i,k} \geq \Gamma_0) < \tau_{thres}$ avec $\tau_{thres}$ un seuil de tolérance sur la probabilité.

L'établissement d'un tel critère probabiliste sur le SINR nécessite de connaître la densité de probabilité du SINR pour toutes paires de liens du réseau. Pour chaque paire de lien, il est nécessaire de connaître tous les paramètres statistiques de la densité de probabilité du SINR pour ce lien. Or, comme le SINR dépend du canal de propagation, il est possible de déterminer les paramètres statistiques de sa densité à partir des paramètres statistiques des canaux de propagation. La connaissance des paramètres statistiques du canal revient à connaître les paramètres statistiques de sa densité de probabilité. On suppose que le type de canal est connu (Rayleigh, Rice, Nakagami...) pour connaître l'expression analytique de la densité de probabilité du canal. Dans le cas d'un canal plat, il est alors possible d'estimer les paramètres statistiques de cette densité à partir de plusieurs échantillons d'estimation du canal $h_{ij}$. Par exemple pour un canal de Rayleigh, le canal $h_{ij}$ suit une loi normale complexe centrée et de variance $2\sigma_{ij}^2$, plus formellement, on a

$$h_{ij} \sim \mathcal{CN}\left(0, 2\sigma_{ij}^2\right).$$

Les paramètres statistiques du canal se réduisent donc à leur variance et peuvent être estimés en prenant la variance empirique des échantillons d'estimés de $h_{ij}$ et en retirant la variance du bruit. Pour le canal de Rice, une méthode pour estimer ses paramètres statistiques à partir d'échantillons bruités du canal $h_{ij}$ est proposée dans l'article [2] et à partir d'échantillons bruités et sous phénomène de masquage de Nakagami-m dans [3]. Pour le canal de Nakagami-m, une implémentation pour estimer ses paramètres statistiques est proposée dans [4]. Enfin, un procédé pour calculer les paramètres statistiques du canal de propagation dans le cas de noeuds mobiles est décrit dans [5]. La généralisation aux canaux à trajets multiples est détaillée plus loin. On note $\gamma_{ij}$ les paramètres statistiques du canal entre l'émetteur $j$ et le récepteur $i$.

On voit ainsi que l'apprentissage du graphe d'interférence suivant ce contexte probabiliste induit les deux problématiques techniques suivantes :

> 1. Chaque noeud $j$ doit estimer les paramètres statistiques du canal de propagation lorsque le noeud $i \neq j$ est en émission afin de déduire les paramètres statistiques la densité de probabilité du SINR.
> 2. Il est nécessaire de mettre en place un critère probabiliste sur le SINR permettant de discriminer les interférences fortes des interférences faibles.

Pour pouvoir résoudre la problématique 1 (estimer $\gamma_{ij}$), il est nécessaire que le noeud i reçoive du signal en provenance du noeud j, et qu'il soit capable d'estimer le canal de propagation de manière suffisamment fiable pour en estimer les statistiques.

En outre, comme il est nécessaire d'estimer les paramètres statistiques du canal de propagation entre toutes les paires de lien du réseau, il existe donc un besoin de trouver un ordonnancement optimisé des transmissions pour diminuer le temps de sondage pour apprendre ces paramètres statistiques (c.-à-d. présentant un nombre de cycles de transmissions simultanées réduit tout en permettant in fine à chaque noeud $i$ de mesurer les caractéristiques du lien entre le noeud $i$ et le noeud $j$ quand le noeud $j$ émet, avec $i \neq j$.

On appelle *cycle* selon l'invention l'étape à l'instant $t$ pendant laquelle les noeuds désignés comme émetteurs dans le cycle émettent. Les autres noeuds estiment pendant le cycle les paramètres statistiques du canal à partir des signaux reçus. L'objectif est de minimiser le nombre de cycles nécessaires pour apprendre les paramètres statistiques de tous les canaux de propagation du réseau. Par abus de langage, nous désignerons $t$ comme étant le « tème cycle » au lieu de considérer « l'instant $t$ ».

A cet effet, suivant un premier aspect, la présente invention décrit un procédé selon la revendication 1.

Un tel procédé permet de définir un ordonnancement de transmissions permettant de réduire le nombre de cycles de transmissions nécessaires pour permettre à chaque noeud du réseau d'évaluer le canal pour une émission de chacun des autres noeuds vers lui.

Dans des modes de réalisation, un tel procédé comprendra en outre la caractéristique suivante:

- le procédé comprend une étape de transmission aux noeuds du réseau dudit ordonnancement ou au moins une étape de transmission à chaque noeud de l'indication de son ordre d'émission associé à son identifiant conformément audit ordonnancement sans faire figurer l'indication des cycles auxquels les autres noeuds doivent émettre conformément audit ordonnancement ;

Dans un mode de réalisation ledit procédé comprendra une étape d'évaluation de l'interférence apportée par un noeud k sur un lien radio depuis un noeud $j$ vers un noeud i, avec $i, j, k \in [1, n]$ et $k \neq i,j,$

- à partir desdites estimations de canal, le noeud i détermine les paramètres statistiques du canal du lien radio $j \rightarrow i$ pour tout noeud $j \neq i$ ;
- à partir des paramètres statistiques déterminées du canal des liens radio, calcul des probabilités $P(\text{SINR}_{j \rightarrow i,k} > \Gamma_0)$, c.-à-d. de la probabilité que le rapport Signal à bruit plus interférence en réception du noeud $i$ pour une transmission utile du noeud $j$ vers le noeud $i$, avec comme interférent le noeud $k$, soit supérieur à un seuil fixé $\Gamma_0$.

Dans des modes de réalisation, un tel procédé comprendra en outre la caractéristique suivante :
un graphe d'interférence est élaboré en mettant en oeuvre les étapes suivantes :

- on identifie les interférences vérifiant la condition $P(\text{SINR}_{j \rightarrow i,k} > \Gamma_0) < \tau_{thres}$ où $\tau_{thres}$ est un seuil prédéfini ;
- les liens correspondant aux interférences identifiées sont tracés, à l'exclusion des liens ne vérifiant pas ladite condition, définissant ainsi les arêtes du graphe ;
- un poids est affecté à chaque arête ainsi définie correspondant à un lien interférant, en vue de diminuer l'effet de l'interférence provenant d'un noeud $k$ une transmission $j \rightarrow i$ en fonction dudit poids : pour une transmission $j \rightarrow i,$ le poids du lien interférent $k \rightarrow i$ vaut $w_{ik} = P(\text{SINR}_{j \rightarrow i,k} < \Gamma_0)$.

Suivant un deuxième aspect, l'invention décrit un système selon la revendication 5.

Dans des modes de réalisation, un tel système comprendra la caractéristique suivante:

- à partir desdites estimations de canal, le noeud i est adapté pour déterminer les paramètres statistiques du canal du lien radio $j \rightarrow i$ pour tout noeud $j \neq i$ et pour calculer, à partir des paramètres statistiques déterminées du canal des liens radio, les probabilités $P(\text{SINR}_{j \rightarrow i,k} > \Gamma_0)$, c.-à-d. la probabilité que le rapport Signal à bruit plus interférence en réception du noeud i pour une transmission utile du noeud $j$ vers le noeud $i$, avec comme interférent le noeud $k$, soit supérieur à un seuil fixé $\Gamma_0$.

**Brève description des figures** :

L'invention sera mieux comprise et d'autres caractéristiques, détails et avantages apparaîtront mieux à la lecture de la description qui suit, donnée à titre non limitatif, et grâce aux figures annexées, données à titre d'exemple.

[Fig. 1] La figure 1 représente schématiquement un réseau ad hoc 100 dans un mode de réalisation de l'invention ;

[Fig. 2] La figure 2 représente les étapes d'un procédé 200, dans un mode de réalisation de l'invention, pour obtenir un ordonnancement et un graphe d'interférence sur cette base ;

[Fig. 3] La figure 3 illustre un exemple de l'ordonnancement selon la méthode $\text{Meth}_{TDMA}$ pour $n = 8$ noeuds ;

[Fig. 4] La figure 4 illustre un exemple d'un ordonnancement pour n = 8 noeuds ;

[Fig. 5] La figure 5 illustre, à l'aide de remplissage de carrés, la mise en oeuvre d'un ordonnancement pour $n = 6$ noeuds,

[Fig. 6] La figure 6 représente, par remplissage de carrés, la méthode gloutonne ($\text{Meth}_{div\_en\_2}$) pour $n = 8$ noeuds ;

[Fig. 7] La figure 7 représente, par remplissage de carrés, l'approche 2-émissions pour $n = 8$ noeuds,

[Fig. 8] La figure 8 représente, avec $n$ le nombre de noeuds du réseau en abscisse et $N_{cycles}$, le nombre de cycles

**EP 4 203 591 B1**

nécessaires, en ordonnées les valeurs obtenues avec les différentes méthodes Meth$_{div\_en\_2}$, Meth$_{2\_em}$, et Meth$_{Mixte}$ ;

[Fig. 9] La figure 9 indique, en fonction du nombre de noeuds $n$, à gauche le nombre de cycles pour les méthodes mixte et TDMA, et à droite le pourcentage de gain entre la méthode mixte et la méthode TDMA ;

[Fig. 10] La figure 10 représente le ratio du nombre de cycles de la méthode mixte sur celui de la méthode TDMA, en fonction du nombre de noeuds ;

[Fig. 11] La figure 11 est une présentation d'un graphe d'interférence (en trait pointillé) déterminé selon l'invention calculé pour différentes topologies de transmission (en trait plein).

Des références identiques peuvent être utilisées dans des figures différentes lorsqu'elles désignent des éléments identiques ou comparables.

**Description détaillée :**

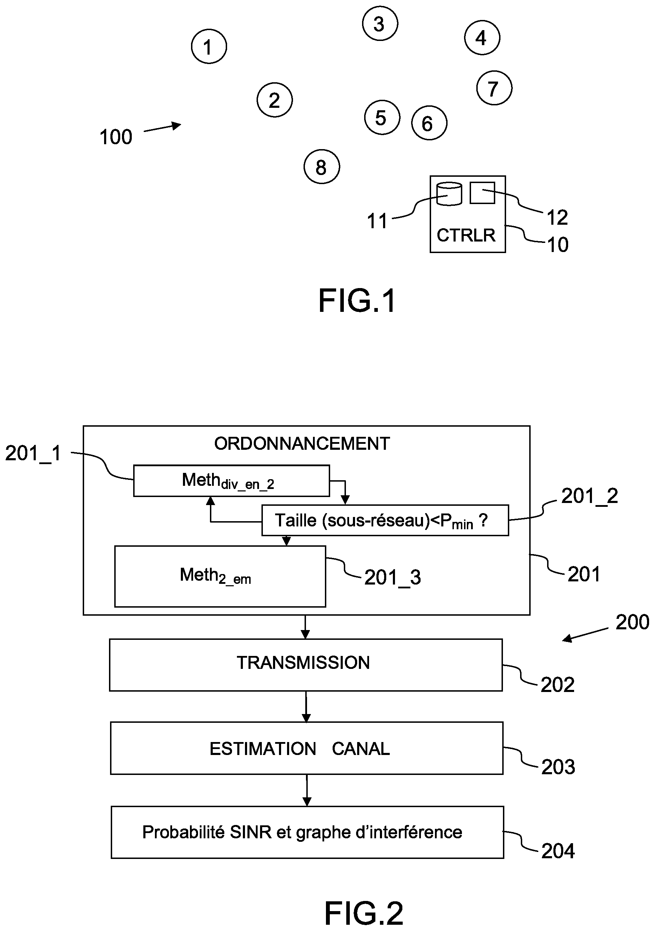

Considérons en référence à la figure 1 un réseau ad hoc 100 de communication comportant $n$ noeuds communiquant sur un canal de communication commun C et une unité électronique de contrôle 10. Un tel réseau ad hoc est sans infrastructure fixe, les noeuds y sont à la fois terminaux et relais.

8 noeuds, référencés 1-8, ont été représentés ($n$ = 8), mais le nombre de noeuds considéré peut prendre des valeurs diverses. Le réseau 100 est par exemple clusterisé par configuration ou dynamiquement.

Le nombre de noeuds dépend du contexte applicatif. L'invention proposé fonctionne quel que soit le nombre de noeuds et est particulièrement intéressante (au moins au niveau du nombre de cycles) quand le nombre de noeuds est grand.

Chaque noeud comprend un émetteur radiofréquence, un récepteur radiofréquence, une mémoire et un microcalculateur (non représentés). Chaque noeud est adapté pour échanger des données sur un canal de communication avec les autres noeuds du réseau.

L'unité de contrôle 10, nommé contrôleur 10, comporte un microcalculateur 12 et une mémoire 11. Dans un mode de réalisation, l'unité de contrôle 10 se trouve au sein d'un noeud du réseau.

Le réseau 100 par exemple correspond à deux clusters proches géographiquement et que l'on souhaite regrouper, par utilisation du même canal de communication, comme expliqué en préambule. On souhaite ici estimer les paramètres statistiques de l'ensemble des canaux de tous les couples émetteurs/récepteurs de l'ensemble de noeuds donnés en un minimum de cycles. Soit $\gamma_{ij}$, $1 \le i \ne j \le n$, les paramètres statistiques du canal entre l'émetteur $j$ et le récepteur $i$, on définit une matrice $\gamma$ de taille $n \times n$ dont l'élément de la $i$ème ligne et $j$ème colonne est $\gamma_{ij}$.

Pour estimer le paramètre statistique $\gamma_{ij}$, il est nécessaire que le noeud $i$ reçoive plusieurs signaux de la part du noeud émetteur $j$ afin de pouvoir utiliser une méthode d'estimation des statistiques du canal. Toutefois pour simplifier l'exposé, dans ce qui suit, nous nous concentrerons sur des procédures d'ordonnancement assurant que chaque noeud reçoive au moins une fois un signal de la part de chaque autre noeud. Ensuite, il suffit d'itérer la procédure d'ordonnancement $n_{stat}$ fois, où $n_{stat}$ représente le nombre d'échantillons de canal que l'on souhaite et à partir desquels estimer les statistiques.

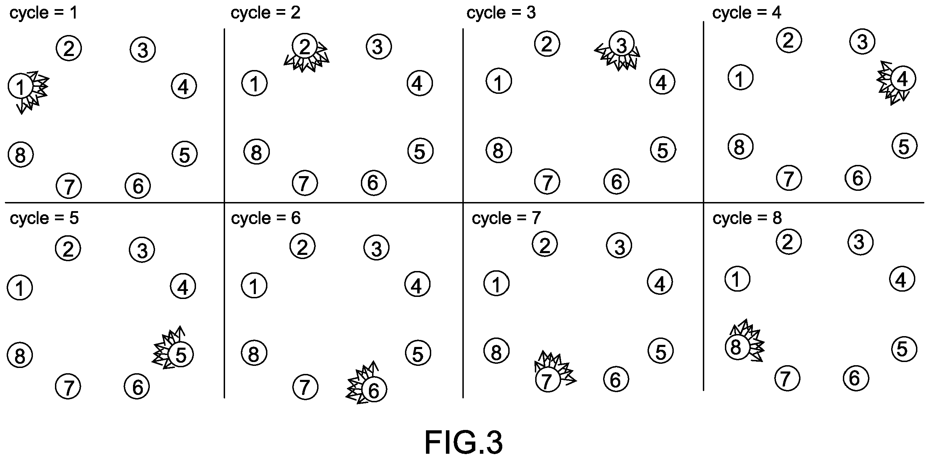

Pour l'estimation des éléments de cette matrice $\gamma$, une solution naïve serait d'ordonnancer les transmissions avec du TDMA (c.-à-d. un seul noeud émetteur à chaque fois) en broadcast : on appellera ici cette méthode Meth$_{TDMA}$. Dans ce cas, à chaque cycle $t$, seul un noeud $j$ émet en broadcast et tous les autres noeuds $i \ne j$ sont en réception, ce qui leur permet d'estimer $\gamma_{ij}$ (en réalité, cela leur permet d'estimer la réalisation du canal de propagation, mais comme expliqué précédemment, il suffit de réitérer le processus $n_{stat}$ fois et d'utiliser un estimateur des statistiques du canal sur les $n_{stat}$ estimations du canal pour obtenir $\gamma_{ij}$). Cet ordonnancement nécessite $n$ cycles de transmission pour estimer tous les paramètres statistiques du canal. En figure 3, on représente, dans le cas d'un réseau constitué de $n$ = 8 noeuds, l'ordonnancement fourni par le TDMA.

Ainsi à un premier cycle $t$ = 1, on désigne le noeud 1 comme émetteur, les autres noeuds du réseau sont récepteurs : ils reçoivent le signal émis sur le canal par le noeud 1 et effectuent des mesures à partir de ce signal reçu. Puis $n$ -1 cycles suivants sont mis en oeuvre : au cycle $t$= $i$, $i$ = 2 à $i$ = $n$ (ici $n$ = 8), le noeud $i$ émet, les autres reçoivent et mesurent.

L'invention propose d'améliorer cette solution (c.-à-d. de trouver des solutions d'ordonnancement de transmissions des noeuds dont le nombre de cycles requis est inférieur à $n$ ) en effectuant des émissions simultanées de plusieurs noeuds, encodées par des séquences orthogonales connues. L'utilisation de séquences orthogonales connues par l'ensemble des noeuds permet, lorsque plusieurs émetteurs transmettent simultanément, de séparer en réception la contribution de chaque émetteur, et donc d'estimer le canal de propagation en provenance de chaque émetteur.

Par exemple, pour implémenter $2^n$ codes de tailles $2^n$, on peut utiliser les codes de Walsh-Hadamard (cf [6]).

<div align="center">5</div>

Pour résoudre les problèmes de synchronisation à la réception, on peut utiliser des codes orthogonaux quasi-synchrones. En effet, les séquences émises par les émetteurs ont un temps de propagation différent entre elles. Pour pallier ce problème, nous proposons d'utiliser des codes qui restent orthogonaux entre eux 2 à 2 s'ils sont décalés de moins de $\delta$, $\delta$ étant la tolérance de décalage pour que les codes restent orthogonaux entre eux 2 à 2.

Dans les solutions de codes orthogonaux quasi-synchrones, il est possible d'implémenter des codes à zone de corrélation nulle (« zero-correlation-zone ») comme proposé par exemple dans [7].

On peut montrer qu'en mode TDD (en anglais Time Division Duplex, où chaque noeud est soit en mode émission soit en mode réception, mais pas les deux modes à la fois, et contrairement au TDMA, plusieurs noeuds peuvent émettre sur le canal en même temps), l'optimisation de l'ordonnancement de transmission se ramène à un problème d'optimisation combinatoire. Dans ce qui suit, ce problème est formalisé.

On note $\mathcal{S}(n) = \{\alpha_1, \ldots, \alpha_T\}$ un ordonnancement de transmissions prenant la forme de $T$ cycles disjoints, dans un réseau de $n$ noeuds où durant le cycle t, $\alpha_t = (j_{1_t}, \ldots j_{m_t})$, est le m-uplet de l'action correspondant à : "les noeuds $j_{1_t}, \ldots, j_{m_t}$ (et eux seuls) émettent simultanément à l'instant t", les autres noeuds du réseau considéré étant alors en réception.

On note $N_{cycles}(\mathcal{S}(n)) = |\mathcal{S}(n)|$ le nombre de cycles de l'ordonnancement $\mathcal{S}$.

On note $\Gamma_n \in \{0,1\}^{n \times n}$ la matrice dont l'élément à la $i$ ème ligne et $j$ ème colonne vaut 1 si le paramètre $\gamma_{ij}$ est estimé (c'est-à-dire si le noeud $j$ au cours du même cycle a émis tandis que le noeud $i$ lui n'a pas émis), et 0 sinon.

L'action $\alpha_t = (j_1, \ldots, j_m)$ entraîne l'estimation de paramètres statistiques du canal sous la contrainte du mode TDD, autrement dit

$$\forall j \in \{j_1, \ldots, j_m\}, \forall i \in \{1, \ldots, n\} \setminus \{j_1, \ldots, j_m\}, \ \Gamma_n(i, j) = 1$$

Si un ordonnancement entraîne l'estimation de toutes les statistiques du canal, c'est-à-dire $\forall i \neq j, \Gamma_n(i, j) = 1$, l'ordonnancement est dit réussi.

Le problème d'optimisation d'ordonnancement se ramène au problème combinatoire suivant :

$$\min_{\mathcal{S}} N_{cycles}(\mathcal{S})$$

sous contraintes que .

$$\forall i \neq j, \Gamma_n(i, j) = 1$$

c'est-à-dire trouver un ordonnancement de transmissions, de taille minimale en nombre de cycles, telle que suite à la mise en oeuvre des émissions par les noeuds, chaque noeud $i$ aura pu recevoir le signal émis sur le canal par le noeud $j$, avec $i \neq j$.

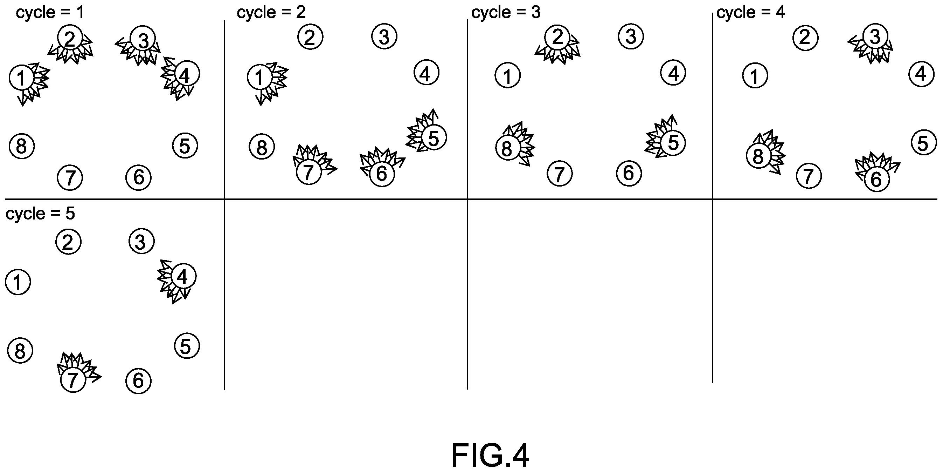

Par exemple, pour $n = 8$, on trouve par énumération exhaustive l'ordonnancement optimal réussi suivant, représenté en figure 4 :

$$\mathcal{S}_{optim}(8) = \{(1,2,3,4) \ ; \ (1,5,6,7) \ ; \ (2,5,8) \ ; \ (3,6,8) \ ; \ (4,7)\} \ .$$

Ainsi, en référence à la figure 4, lors du cycle t=1, les noeuds 1, 2, 3, 4 émettent sur le canal, chacun ayant avant émission multiplié son signal avec une séquence orthogonale par rapport à celles utilisées par les trois autres noeuds. Les noeuds 5, 6, 7, 8 sont eux en réception ; ils extraient chacun le signal respectif provenant de chacun des noeuds émetteurs après avoir effectué un produit scalaire par la séquence orthogonale du noeud émetteur dont le signal est à extraire. Ensuite chacun des noeuds $i$, $i = 5$ à 8, peut estimer les statistiques de chaque lien de $j$ vers $i$, $j = 1$ à 4. Puis lors du cycle $t = 2$, les noeuds 1, 5, 6, 7 émettent sur le canal, Les noeuds 2, 3, 4, 8, en réception, estiment les caractéristiques/statistiques du canal à partir des signaux qu'ils reçoivent etc.

On peut comparer cet ordonnancement optimal réussi avec l'ordonnancement selon la méthode Meth$_{TDMA}$ (qui est réussi également) et qui peut s'écrire comme suit :

$$\mathcal{S}_{TDMA}(8) = \{(1)\;;\;(2)\;;\;(3)\;;\;(4)\;;\;(5)\;;\;(6)\;;\;(7)\;;(8)\}$$

On a $N_{cycles}(\mathcal{S}_{TDMA})$ = 8et $N_{cycles}(\mathcal{S}_{optim})$ = 5 : : l'ordonnancement optimal permet de réduire le nombre de cycles pour estimer toutes les statistiques des canaux de propagation.

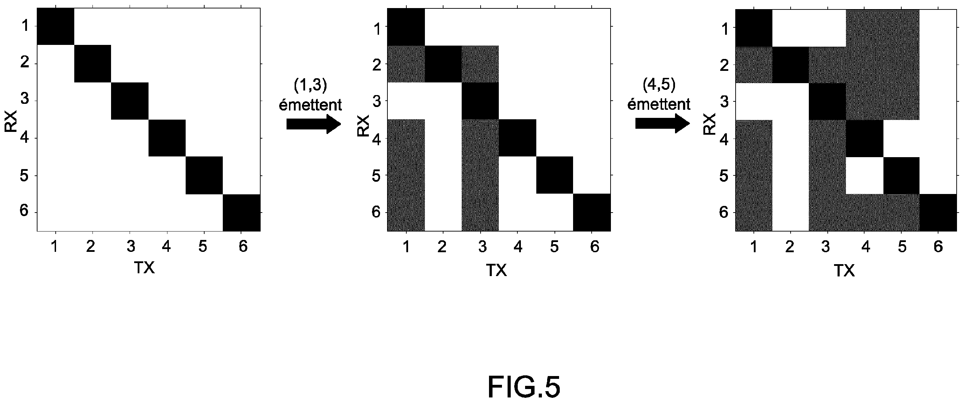

Par ailleurs, ce problème d'ordonnancement combinatoire peut être représenté graphiquement par un "remplissage de carrés", avec en lignes les récepteurs (RX) et en colonnes les émetteurs (TX). Un exemple graphique est illustré en Figure 5 pour $n$ = 6. Le carré le plus à gauche représente l'instant initial : aucun noeud n'a encore émis ni reçu. Les cases noires représentent le fait que le noeud i ne doit pas estimer $\gamma_{ii}$, tandis que les cases blanches représentent les statistiques non encore estimées. On suppose qu'à $t$ = 1, les noeuds 1 et 3 émettent. Dans ce cas, les noeuds 2, 4, 5 et 6 peuvent estimer le canal en provenance des noeuds 1 et 3 (puisque des séquences orthogonales connues sont utilisées, il est possible d'isoler la contribution de chaque émetteur). On colore ainsi en gris les cases qui correspondent aux canaux estimés. Puis, on itère pour les transmissions des noeuds aux cycles $t$ = 2,3,...

Le problème de trouver l'ordonnancement optimal est d'une grande complexité et ne peut pas être résolu par énumération exhaustive de tous les ordonnancements possibles pour $n$ > 8, aussi il est proposé dans ce qui suit des solutions avantageuses même si sous-optimales pour résoudre ce problème. Il sera aussi démontré théoriquement que le nombre de cycles requis par les approches proposées est plus faible que le nombre de cycle de la méthode Meth$_{TDMA}$.

Dans un mode de réalisation, la solution d'ordonnancement selon l'invention combine deux méthodes décrites ci-dessous : l'approche gloutonne, encore appelée division-en-2 et l'approche 2-émissions par noeud.

Approche gloutonne : division-en-2 (libellée Meth$_{div\ en\ 2}$)

On note $\mathcal{S}_{divide}(n) = \{\alpha_1;...;\alpha_{N_{cycles}(\mathcal{S}_{divide}(n))}\}$ l'ordonnancement utilisant l'approche gloutonne.

Description de l'approche :

- les actions $\alpha_1 = \left(1,...,\left\lceil\frac{n}{2}\right\rceil\right)$ et $\alpha_2 = \left(\left\lceil\frac{n}{2}\right\rceil + 1,...,n\right)$ sont effectuées ( $\left\lceil\frac{n}{2}\right\rceil$ est la partie entière supérieure de n/2), permettant d'obtenir la matrice

$$\Gamma_n = \begin{pmatrix} \Gamma_{\lceil n/2\rceil} & \mathbf{1}_{\lceil n/2\rceil,\lfloor n/2\rfloor} \\ \mathbf{1}_{\lfloor n/2\rfloor,\lceil n/2\rceil} & \Gamma_{\lfloor n/2\rfloor} \end{pmatrix}$$

avec $\mathbf{1}_{m,n}$ la matrice composée uniquement de 1 de dimension $m \times n$.

Le problème se ramène alors à 2 sous-réseaux indépendants de taille $\left\lceil\frac{n}{2}\right\rceil$ et $\left\lfloor\frac{n}{2}\right\rfloor$ (les sous-réseaux $\left(1,2...,\left\lceil\frac{n}{2}\right\rceil\right)$ et $\left(\left\lceil\frac{n}{2}\right\rceil + 1,\left\lceil\frac{n}{2}\right\rceil + 2...,n\right)$ indépendants à la place du réseau initial n), qu'on résout récursivement en parallèle.

Au fur et à mesure des itérations, la taille des sous-réseaux considérés diminue (division à peu près par deux à chaque itération) et leur nombre total augmente (multiplication par deux à chaque itération).

Ainsi, à l'itération 2 du processus, on applique la même stratégie consistant à séparer le réseau en 2 sous-réseaux appliquée en parallèle

- au réseau de noeuds $1,...,\left\lceil\frac{n}{2}\right\rceil$ que l'on sépare en deux sous-réseaux $1,...,\left\lceil\frac{n}{4}\right\rceil$ et $\left\lceil\frac{n}{4}\right\rceil + 1,...,\left\lceil\frac{n}{2}\right\rceil$.

- au réseau de noeuds $\left\lceil\frac{n}{2}\right\rceil + 1,...,n$ que l'on sépare en deux sous-réseaux $\left\lceil\frac{n}{2}\right\rceil + 1,...,\left\lceil\frac{n}{2}\right\rceil + \left\lceil\frac{n}{4}\right\rceil$ et $\left\lceil\frac{n}{2}\right\rceil + \left\lceil\frac{n}{4}\right\rceil + 1$ á $n$.

On détermine l'action $\alpha_3$ du 3ème cycle de $\mathcal{S}_{divide}(n)$ comme la réunion des actions de transmission d'un sous-réseau du réseau de noeuds $1, ..., \left\lceil\frac{n}{2}\right\rceil$ et d'un sous-réseau du réseau de noeuds $\left\lceil\frac{n}{2}\right\rceil + 1, ..., n,$ à savoir

$$\alpha_3 = \left(1, ..., \left\lceil\frac{n}{4}\right\rceil, \left\lceil\frac{n}{2}\right\rceil + 1, ..., \left\lceil\frac{n}{2}\right\rceil + \left\lceil\frac{n}{4}\right\rceil\right)$$ L'action $\alpha_4$ du 4ème cycle de $\mathcal{S}_{divide}(n)$ est déterminée comme la réunion des actions de transmission des sous-réseaux restants, à savoir $\alpha_4 = \left(\left\lceil\frac{n}{4}\right\rceil + 1, ..., \left\lceil\frac{n}{2}\right\rceil, \left\lceil\frac{n}{2}\right\rceil + \left\lceil\frac{n}{4}\right\rceil + 1, ..., n\right).$

Et ainsi de suite, à l'issue de la rième itération, l'action $\alpha_{2r-1}$ est déterminée comme la réunion des actions des premiers cycles déterminées pour les $2^{r-1}$ sous-réseaux considérés et l'action $\alpha_{2r}$ est déterminée comme la réunion des actions des deuxièmes cycles déterminées pour lesdits $2^{r-1}$ sous-réseaux.

On a trouvé par approche exhaustive sur simulation que pour des réseaux de n≤5, on a $N_{cycles}(\mathcal{S}_{divide})$ = $N_{cycles}(\mathcal{S}_{TDMA})$, donc on les résout parallèlement en TDMA à partir du stade les sous-réseaux sont de taille inférieure ou égale à 5 noeuds.

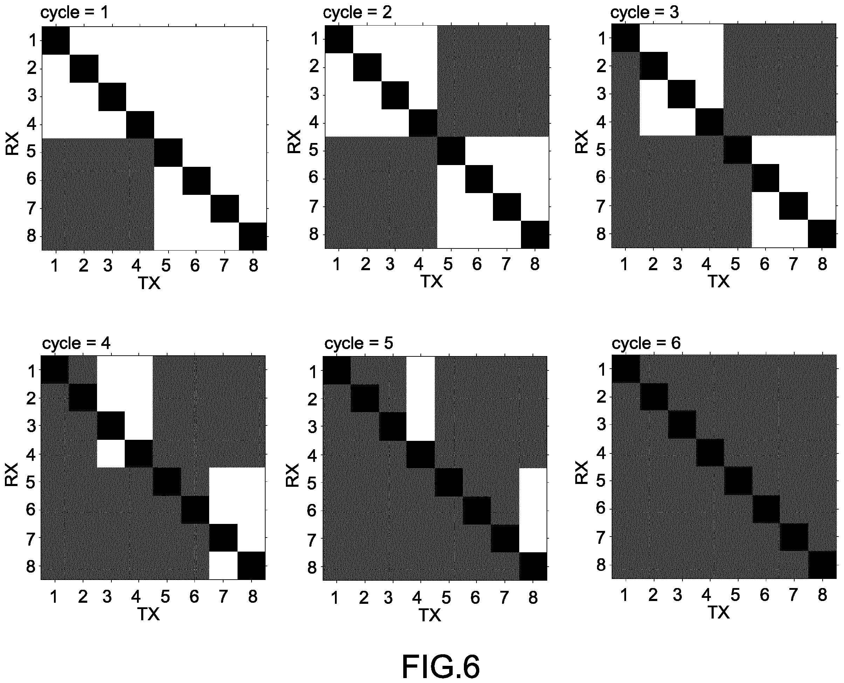

En Figure 6, le fonctionnement de cette approche gloutonne avec TDMA quand les sous-réseaux sont de taille inférieure ou égale à 5 noeuds est illustré sur un exemple d'un réseau constitué de $n$ =8 noeuds.

A t =1 les noeuds 1 à 4 émettent, ce qui permet aux noeuds 5 à 8 d'estimer le canal en provenance de ces noeuds. Ensuite à t =2, les noeuds 5 à 8 émettent, ce qui permet aux noeuds 1 à 4 d'estimer le canal en provenance de ces noeuds, et ainsi de suite. On a $N_{cycles}(\mathcal{S}_{divide}(8))$ = 6.

On peut démontrer par récurrence que le nombre de cycles de cette approche gloutonne est donné par $N_{cycles}(\mathcal{S}_{divide}(n))$ = 2q + s, où $q = \left\lceil\log_2\left(\frac{n}{5}\right)\right\rceil$ est le nombre de fois où on divise le réseau en 2 sous-réseaux jusqu'à ce que les sous-réseaux soient de taille inférieure ou égale à 5, et s la taille des derniers carrés, avec $s \leq 5$.

Approche : 2-émissions par noeud (Meth$_{2\,em}$)

Dans le but d'avoir une solution meilleure que le TDMA, la stratégie pour obtenir un ordonnancement réussi est de faire de l'émission simultanée de plusieurs utilisateurs, et on peut montrer que cela implique que chaque utilisateur doit émettre au moins sur 2 cycles différents. Par exemple, si les noeuds 1 et 2 émettent simultanément durant un cycle, les valeurs $\gamma_{12}$ et $\gamma_{21}$ ne seront alors pas estimées pendant ce cycle. Pour que ce soit le cas, il faut que le noeud 1 émette à nouveau, mais pas en même temps que le noeud 3 et vice versa. Pour optimiser les transmissions, l'idée est donc de proposer un ordonnancement où chaque utilisateur émet exactement 2 fois. On note $\mathcal{S}_{2TX}(n)$ = $\{\beta_1, ..., \beta_{N_{cycles}(\mathcal{S}_{2TX}(n))}\}$ l'ordonnancement utilisant l'approche d'exactement 2-émissions par noeud.

On fixe $m$ comme étant le nombre maximal de transmissions simultanées parmi tous les cycles de $\mathcal{S}_{2TX}$. On définit $\beta_1$ = (1, ..., m). Chaque noeud doit émettre exactement 2 fois, donc comme 1, ..., $m$ ont émis en même temps au premier cycle, on laisse le noeud 1 émettre à nouveau lors du deuxième cycle, mais pas les noeuds 2, ..., m. De plus, on continue d'émettre $m$ noeuds simultanément à chaque cycle tant que les noeuds n'émettent pas plus de 2 fois chacun. On aura donc $\beta_2$ = (1, m + 1, m + 2, ..., 2m - 1). Ensuite, le noeud 2 n'a émis qu'une fois, donc il émettra simultanément au troisième cycle avec au maximum $m$ - 1 autres noeuds à part ceux du premier cycle, donc on aura $\beta_3$ = (2, m + 1, 2m, ..., 3m - 3). Et ainsi de suite... A la fin, pour $m$ fixé, on a donc besoin d'au moins $m$ + 1 cycles pour que l'ordonnancement soit réussi. Le but est donc de trouver $m$ tel que l'ordonnancement soit réussi en exactement $m$ + 1 cycles avec l'approche de 2 transmissions par noeud.

On doit donc trouver $m$ de telle sorte que toutes les transmissions ont lieu, mais aussi prendre $m$ le plus petit possible. Comme on veut effectuer 2$n$ transmissions en tout (2 transmissions par noeud), il faut trouver $m$ tel que $mN_{cycles}(\mathcal{S}_{2TX}(n)) \geq 2n$. Comme $N_{cycles}(\mathcal{S}_{2TX}(n))$ = $m$ + 1, par simplification de calcul, on trouve

$$N_{cycles}\left(\mathcal{S}_{2TX}(n)\right) = \left\lceil \frac{1 + \sqrt{1 + 8n}}{2} \right\rceil.$$

(La valeur optimale de m en fonction de n déduite est : $\left\lceil \dfrac{1 + \sqrt{1 + 8n}}{2} \right\rceil$ -1 )

Par exemple, pour un réseau de taille *n*, c.-à-d. avec *n* noeuds, et où *n* = 8, la stratégie proposée fournit les noeuds émetteurs suivant à chaque cycle *t*.

| | | | | | | | |
|------|---|---|---|---|---|---|---|
| t=1 : | 1 | 2 | 3 | 4 | | | |
| t=2 : | 1 | | | | 5 | 6 | 7 |
| t=3 : | | 2 | | | 5 | | 8 |
| t=4 : | | | 3 | | 6 | | |
| t=5 : | | | | 4 | | 7 | 8 |

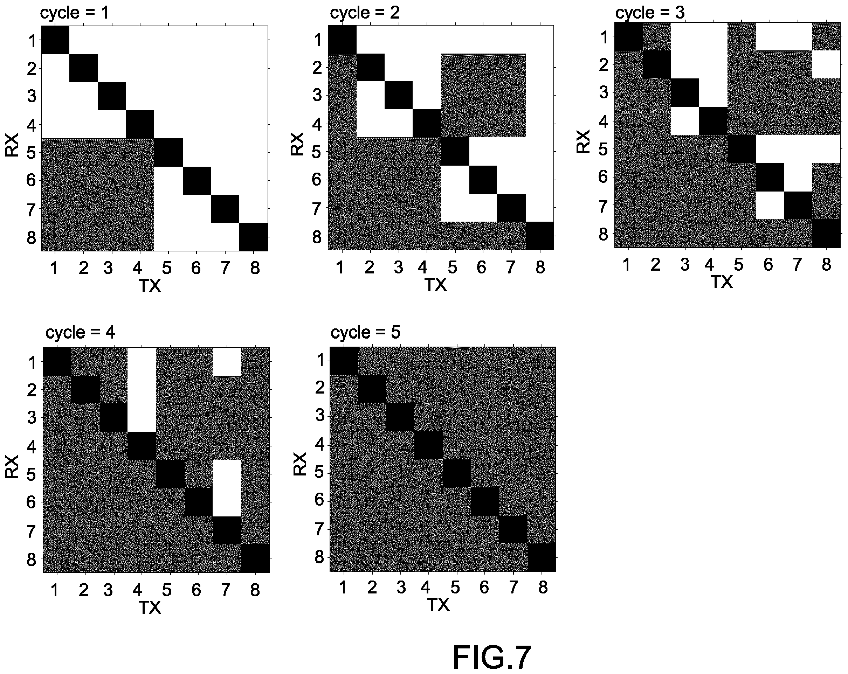

En Figure 7 on représente graphiquement cet ordonnancement obtenu par remplissage de carrés de l'approche 2-émissions pour *n* = 8 noeuds, avec *n* = 8 noeuds, $N_{cycles}$ (S$_{2TX}$ (8)) = 5.

Dans un premier temps est déterminé m le nombre maximal de transmissions à chaque cycle. Sa valeur optimale est donnée par la formule ci-dessus. pour construire l'ordonnancement, à chaque cycle, il y a au maximum n noeuds qui émettent en même temps. Tant que les 2 règles énoncées sont respectées, on fera émettre le plus de noeuds possibles simultanément sans dépasser m.

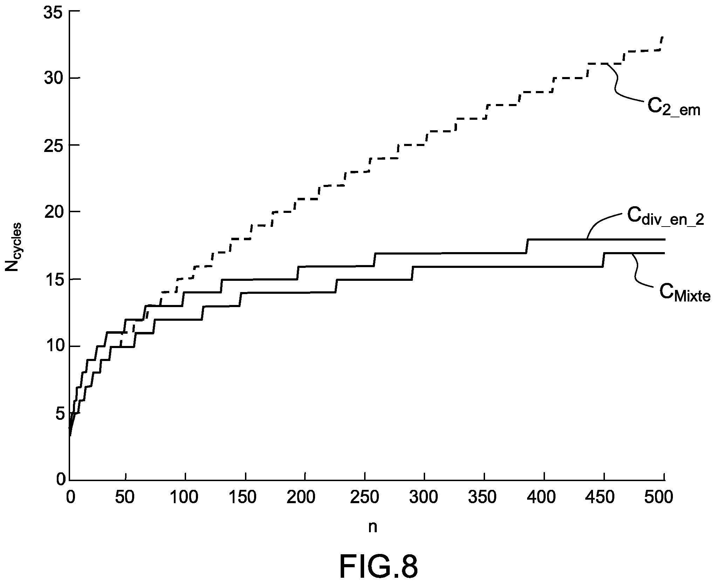

Il a été mis en évidence par les inventeurs que lorsque *n* est faible, la stratégie à deux émissions est plus efficace (moins de cycles) que la stratégie divisions-en-2, et que cette relation d'ordre s'inverse lorsque *n* grandit. A titre d'illustration, la figure 8 représente, avec *n* le nombre de noeuds du réseau en abscisse et Ncycles, le nombre de cycles nécessaires, les valeurs obtenues avec la méthode Meth$_{div\_en\_2}$ (courbe Cdiv_en_2) et avec la méthode Meth$_{2\_em}$ (courbe C$_{2\_em}$).

Aussi, afin de minimiser le nombre de cycles, l'invention propose donc une méthode mixte, nommée Meth$_{Mixte}$, qui consiste à appliquer la stratégie division-en-2 jusqu'à une certaine valeur, ce qui permet de déterminer un certain nombre de cycles, puis d'appliquer la stratégie à 2-émissions sur les sous-réseaux de taille plus faible, ce qui permet de compléter l'ordonnancement par la détermination des cycles restant à déterminer.

On peut démontrer que la valeur du nombre de cycles pour déterminer un ordonnancement avec la solution mixte selon l'invention est donné par

$$N_{cycles}\left(\mathcal{S}_{mixt}(n)\right) = 2q_{mixt} + N_{cycles}\left(\mathcal{S}_{2TX}(r_{mixt})\right)$$

avec $q_{mixt} = \left\lceil \log_2 \left( \dfrac{n}{\text{Pmin}} \right) \right\rceil$, $r_{mixt} = \left\lceil \dfrac{n}{2^{q_{mixt}}} \right\rceil$ et Pmin la taille de sous-réseau en-dessous duquel on passe de la stratégie de division-en-2 à la stratégie de 2-émissions par émetteur.

Selon cette méthode mixte, en considérant initialement le réseau de *n* noeuds, on met d'abord en oeuvre la méthode Meth$_{div\_en\_2}$ si n est supérieur à Pmin :

- on détermine un premier cycle, associé à l'action $\alpha_1$ tel que $\alpha_1 = \left(1, ..., \left\lceil \dfrac{n}{2} \right\rceil\right)$ et un deuxième cycle, associé à l'action $\alpha_2$ tel que $\alpha_2 = \left(\left\lceil \dfrac{n}{2} \right\rceil + 1, ..., n\right)$ où $\left\lceil \dfrac{n}{2} \right\rceil$ est la partie entière supérieure de *n*/2 ; puis

- on itère la précédente étape, mais sur le sous-réseau de noeuds $\left\{1, ..., \left\lceil \dfrac{n}{2} \right\rceil\right\}$ de taille $\left\lceil \dfrac{n}{2} \right\rceil$ à la place du réseau initial de *n* noeuds d'une part, ce qui détermine un premier cycle et un deuxième cycle pour ce sous-réseau de noeuds et on réitère la précédente étape aussi sur le sous-réseau de noeuds $\{\left\lfloor\frac{n}{2}\right\rfloor+1, \dots, n\}$ de taille $\left\lfloor\frac{n}{2}\right\rfloor$ à la place du réseau initial de $n$ noeuds, ce qui détermine un premier cycle et un deuxième cycle pour ce sous-réseau de noeuds ; on détermine l'action $\alpha_3$ du 3ème cycle de $\mathcal{S}_{divide}(n)$ comme la réunion des actions de transmission d'un sous-réseau du réseau de noeuds $1, \dots, \left\lfloor\frac{n}{2}\right\rfloor$ et d'un sous-réseau du réseau de noeuds $\left\lfloor\frac{n}{2}\right\rfloor + 1, \dots, n$ , à savoir

$$\alpha_3 = \left(1, \dots, \left\lfloor\frac{n}{4}\right\rfloor, \left\lfloor\frac{n}{2}\right\rfloor + 1, \dots, \left\lfloor\frac{n}{2}\right\rfloor + \left\lfloor\frac{n}{4}\right\rfloor\right)$$ et similairement

$$\alpha_4 = \left(\left\lfloor\frac{n}{4}\right\rfloor + 1, \dots, \left\lfloor\frac{n}{2}\right\rfloor, \left\lfloor\frac{n}{2}\right\rfloor + \left\lfloor\frac{n}{4}\right\rfloor + 1, \dots, n\right)$$ ; et

- tant que la taille des sous-réseaux est supérieure à un seuil Pmin, on renouvelle ces étapes de manière récursive, telle qu'à l'issue de la $r^{ième}$ itération, l'action $\alpha_{2r-1}$ est déterminée comme la réunion des actions de transmission déterminées pour les $2^{r-1}$ sous-réseaux considérés et l'action $\alpha_{2r}$ est déterminée comme la réunion des actions de transmission déterminées pour lesdits $2^{r-1}$ sous-réseaux ; et

quand la taille, $n'$, des sous-réseaux considérés devient inférieure ou égale à Pmin, les cycles $\alpha_1, \dots, \alpha_T$, ayant alors été déterminés, avec $T$ le nombre de cycles pendant lequel on applique la méthode Meth$_{div\_en\_2}$, on met alors en oeuvre la méthode Meth$_{2\_em}$ :

- pour chacun des N' sous-réseaux considérés de taille $n'$, N' étant le nombre de sous-réseaux considérés, déterminer un ordonnancement de transmission vérifiant les règles suivantes : dans cet ordonnancement, chaque noeud du sous-réseau considéré doit émettre lors de deux cycles exactement ; et lorsque 2 noeuds émettent en même temps dans le même cycle, ceux-ci ne peuvent pas émettre à nouveau en même temps dans l'autre cycle ;

- soit $\{\beta_{j1}, \dots, \beta_{jL}\}$ l'ordonnancement ainsi obtenu pour chaque sous-réseau $j$, $j$ = 1 à N', avec $L = \left\lceil\frac{1+\sqrt{1+8n'}}{2}\right\rceil$, alors pour $k$ = 1 à L, l'action $\alpha_{T+k}$ est alors déterminée comme la réunion, de $j$ = 1 à N', des actions $\beta_{jk}$, soit :

$$\alpha_{T'+1} = \{\beta_{11}, \dots, \beta_{N'1}\} \; ; \; \alpha_{T'+2} = \{\beta_{12}, \dots, \beta_{N'2}\} \; ; \; \dots \; ; \; \alpha_{T'+L} = \{\beta_{1L}, \dots, \beta_{N'L}\} \; ;$$

l'ordonnancement des transmissions résultant de l'opération de détermination étant

$$\mathcal{S}(n) = \{\alpha_1, \alpha_2, \alpha_3 \dots, \alpha_{T'}, \alpha_{T'+1}, \dots, \alpha_{T'+L}\}.$$

L'intérêt de cette méthode Meth$_{Mixte}$ est qu'elle combine les avantages des 2 méthodes Meth$_{div\_en\_2}$ et Meth$_{2\_em}$ évoquées précédemment, à savoir :

- la complexité en $\mathcal{O}(\log n)$ pour de grandes valeurs de $n$ > Pmin via la méthode Meth$_{div\_en\_2}$ (où $\mathcal{O}$ est la notation $\mathcal{O}$ de Landau qui dénote le caractère dominé d'une fonction par rapport à une autre ) ;
- les meilleures performances pour de faibles valeurs de $n$ < Pmin via la méthode Meth$_{2\_em}$, dont la complexité est $\mathcal{O}(\sqrt{n})$.

La Figure 8 représente le nombre N$_{cycles}$ de cycles nécessaires en fonction du nombre n de noeuds avec les méthodes respectives Meth$_{div\_en\_2}$ (courbe C$_{div\_en\_2}$), Meth$_{2\_em}$ (C$_{2\_em}$) et Meth$_{Mixte}$ (courbe C$_{Mixte}$) : le nombre de cycles de la méthode mixte est inférieur à celui des deux autres méthodes, montrant bien l'amélioration qu'apporte ce mode de réalisation de l'invention.

En termes de complexité, la méthode mixte Meth$_{Mixte}$ montre un gain (une réduction du nombre de cycles) par rapport à la méthode Meth$_{TDMA}$ qui est de l'ordre de $\mathcal{O}(n)$.

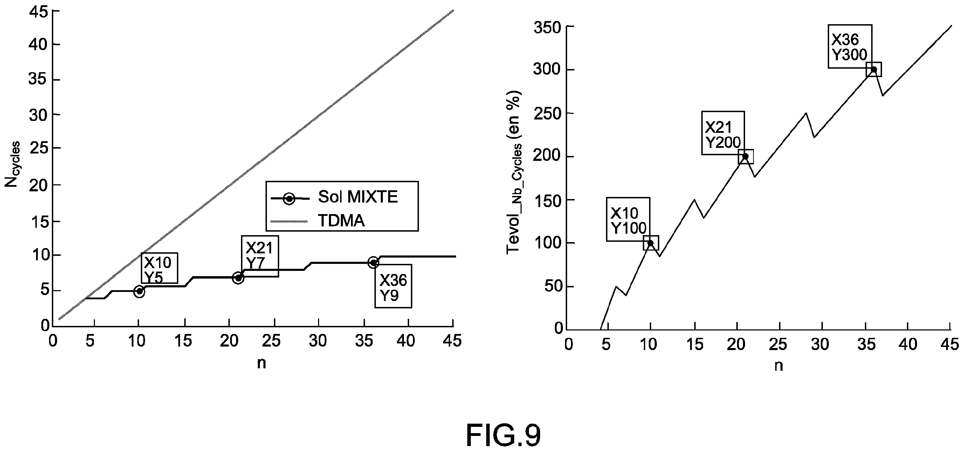

La Figure 9 compare les performances de la méthode mixte (courbe Sol MIXTE) et de la méthode TDMA (courbe TDMA) en fonction du nombre de noeuds $n$, avec, à gauche, le nombre de cycles N$_{cycles}$ et à droite le pourcentage de gain (Tevol$_{\_Nb\_Cycles}$). On observe ainsi que les gains de la méthode mixte apparaissent aussi pour de faibles valeurs de $n$. En effet, pour de faibles valeurs de $n$ < Pmin, la méthode mixte est équivalente à la méthode Meth$_{2\_em}$, qui est une solution en $O(\sqrt{n})$ au lieu de O(n) pour le TDMA. Pmin a été trouvé par approche exhaustive par simulations numériques de façon à minimiser le nombre de cycles pour la méthode mixte. Pmin peut prendre n'importe quelle valeur dans la plage de valeurs optimales{21, ...,28}. Les performances de la méthode mixte sont exactement les mêmes, peu importe la valeur de Pmin choisie dans cette plage.

Par exemple :

- pour n=10, on résout le problème en 5 cycles, divisant le nombre de cycles par 2 par rapport au TDMA qui requiert 10 cycles ;

- pour n=21, on résout le problème en 7 cycles, divisant le nombre de cycles par 3 par rapport au TDMA qui requiert 21 cycles.

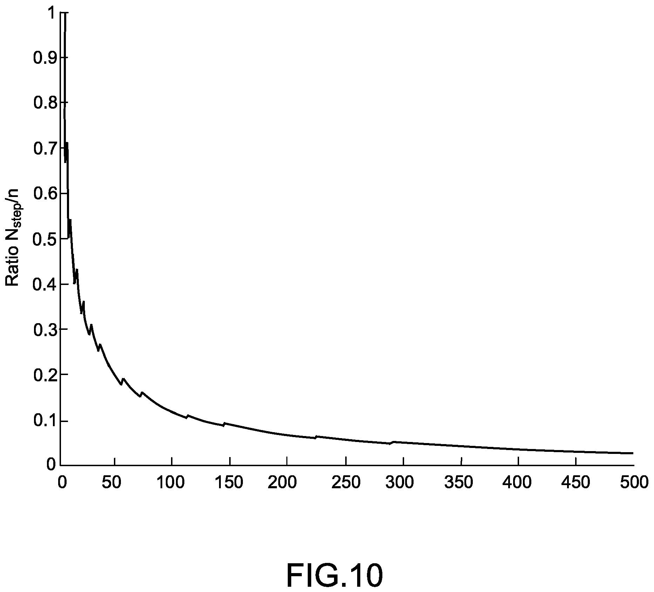

La Figure 10 représente le rapport entre le nombre de cycles de la méthode mixte selon l'invention solution proposée et du nombre de cycles pour la méthode TDMA, en fonction du nombre de noeuds. Formellement, on a :

$$ratio = \frac{N_{cycles}\big(\mathcal{S}_{mixt}(n)\big)}{N_{cycles}\big(\mathcal{S}_{TDMA}(n)\big)} = \frac{N_{cycles}\big(\mathcal{S}_{mixt}(n)\big)}{n} \to_{n \to +\infty} 0$$

Cela montre que la méthode mixe selon l'invention est également asymptotiquement efficace par rapport à la méthode TDMA. En effet, la solution mixte est en $\mathcal{O}(\sqrt{n})$ pour de faibles valeurs de $n$ et en $\mathcal{O}(\log n)$ pour de grandes valeurs de .

Il a ainsi été démontré le gain de la méthode selon l'invention sur l'optimisation de l'ordonnancement de transmission sous la contrainte du mode TDD. Il est à présent décrit, en référence à la figure 2, dans un mode de réalisation, les étapes pour établir un ordonnancement pertinent, pour estimer les paramètres statistiques du canal à partir de l'ordonnancement établi, puis pour former le graphe d'interférence.

Dans une première étape 201, une étape d'obtention d'un ordonnancement suivant la méthode mixte Meth$_{Mixte}$ décrite ci-dessus est mise en oeuvre.

Cette étape 201 est mise en oeuvre dans le contrôleur 10 : sa mémoire 11 comporte des instructions logicielles qui lorsqu'elles sont exécutées sur le microcalculateur 12, mettent en oeuvre les opérations de l'étape 201.

De la même façon, la mémoire de chaque noeud comporte des instructions logicielles qui lorsqu'elles sont exécutées sur le microcalculateur du noeud, mettent en oeuvre les opérations du procédé 200 incombant au noeud.

Comme décrit précédemment, si la taille du réseau de cette taille est supérieure à la valeur fixée d'un seuil Pmin, la méthode Meth$_{div\_en\_2}$ est mise en oeuvre (étape 201_1). Puis la taille de chacun des sous-réseaux obtenus est comparée à la valeur du seuil Pmin (étape 201 _2). Si cette taille est supérieure à Pmin, l'étape 201_1 est réitérée en parallèle sur les sous-réseaux.

Sinon, si cette taille est inférieure ou égale à Pmin, la méthode Meth$_{2\_em}$ est alors mise en oeuvre (étape 201_3) pour déterminer les derniers cycles restant à déterminer, et un ordonnancement $\mathcal{S}(n)$, de $T0$ cycles ($T0 = T' + L$) est finalement obtenu selon l'invention : $\mathcal{S}(n) = \{\alpha_1, ..., \alpha_{T0}\}$.

Le contrôleur 10 envoie alors cet ordonnancement aux différents noeuds du réseau.

Dans un autre mode de réalisation, consommant moins de ressources, n'est envoyée que l'identifiant de chaque noeud et de son numéro d'ordre correspondant au moment où il émet (ou alors où il reçoit) à la place de l'ordonnancement complet il n'est envoyé que l'identifiant de chaque noeud : tel noeud sera le 1, le suivant sera le 2...

Cet ordonnancement des transmissions des noeuds du réseau ainsi déterminé permet ainsi de diminuer le nombre de cycles nécessaire à ce que chaque noeud puisse « écouter » la réception d'un signal sur le canal depuis chaque autre noeud.

Dans une étape 202, les transmissions sont alors mises en oeuvre par les noeuds conformément à l'ordonnancement reçu : au cycle t, avec $\alpha_t = (j_{1_t}, ...j_{m_t})$ défini dans l'ordonnancement, les noeuds $j_{1_t}, ...,j_{m_t}$ émettent, les autres sont en réception. $n_{stat}$ échantillons de séquences orthogonales sont ainsi émis par les noeuds émetteurs, les séquences orthogonales et l'affectation respectives entre eux des séquences orthogonales étant connues des noeuds.

A l'étape 203, les noeuds effectuent les opérations d'estimation des liens à partir des signaux reçus.

Soit $n_{orth}$ la taille d'une séquence orthogonale quasi-synchrone, un noeud $i$ reçoit, à chaque cycle $t$

$$\mathbf{y}_i = \sum_{j \in \alpha_t} \sqrt{P_j} h_{ij} \mathbf{x}_j + \mathbf{b}_i$$

où $P_j$ est la puissance transmise de $j$, $h_{ij}$ est le canal aléatoire de la transmission $j \to i$, $\mathbf{b}_i$ est un bruit blanc complexe gaussien de variance $P_{noise}$, et $\mathbf{x}_j \in \mathbb{C}^{n_{orth} \times 1}$ représente la séquence orthogonale quasi-synchrone émise par le noeud $j$. A la réception, les termes interférents sont éliminés par le noeud $i$ par produit scalaire avec les séquences orthogonales désirées. Pour estimer le canal du lien $k$->$i$, chaque noeud $i$ effectue le produit scalaire suivant:

$$z_{ik} = \mathbf{x}_k^T \mathbf{y}_i = n_{orth}\sqrt{P_k} h_{ik} + \mathbf{x}_k^T \mathbf{b}_i$$

L'estimation de $h_{ik}$, noté $\hat{h}_{ik}$, est alors

$$\hat{h}_{ik} = \frac{1}{n_{orth}\sqrt{P_k}} z_{ik} = h_{ik} + \frac{1}{n_{orth}\sqrt{P_k}} \mathbf{x}_k^T \mathbf{b}_i$$

On réalise alors cette opération pour $n_{stat}$ séquences reçues et on obtient $\hat{\mathbf{h}}_{ik} \in \mathbb{C}^{n_{stat} \times 1}$ tel que

$$\forall p \in \{1, ..., n_{stat}\}, \hat{\mathbf{h}}_{ik}(p) = h_{ik}(p) + \frac{1}{n_{orth}\sqrt{P_k}} \mathbf{x}_k^T \mathbf{b}_i(p)$$

D'autres méthodes pour estimer le canal auraient pu être utilisées pour la méthode des moindre-carrés (least-square en anglais) ou l'estimation par minimum-mean-square-error (MMSE) (cf [8]).
Ensuite, à partir des estimées obtenues de canal, les paramètres statistiques du canal $k \to i$ sont déterminées par le noeud $i$ à l'aide d'une méthode connue de la littérature, telle que citée au paragraphe [0009] : par exemple dans le cas d'un canal de Rayleigh, la variance du canal du lien $k \to i$ est estimée en prenant la variance empirique des échantillons d'estimés $\hat{h}_{ik}$ et en retirant la variance du bruit $P_{noise}$.

Dans une étape 204, à partir des paramètres statistiques du canal, les probabilités de SINR et le graphe d'interférence sont déterminés par le noeud $i$ : chaque noeud $i$ connaît uniquement son graphe d'interférence local, c'est-à-dire $P(SINR_{j \to i,k} > \Gamma_0)$ pour tout émetteur $j \neq i$ et pour tout interférent $k \neq j, i$.

Pour toute topologie de transmission opérationnelle (c.-à-d. sachant quel(s) noeuds émet(tent) et vers quel(s) noeud(s)), la probabilité d'outage du SINR peut être calculée immédiatement à partir des statistiques du canal. Le nouveau graphe d'interférence est défini comme suit :

- arête du graphe : pour une transmission j→i, le lien interférent k→i correspond à une interférence forte si $P(SINR_{j \to i,k} > \Gamma_0) < \tau_{thres}$, sinon l' interférence est faible et le lien n'est pas représenté sur le graphe, avec

$$SINR_{j \to i,k} = \frac{P_j |h_{ij}|^2}{P_{noise} + P_k |h_{ik}|^2}$$, $\Gamma_0$ un seuil prédéfini pour le $SINR$ et $\tau_{thres}$ un seuil prédéfini pour la probabilité ;

- poids d'une arête : pour une transmission j→i, le lien interférent k→i vaut $w_{ik} = P(SINR_{j \to i,k} < \Gamma_0)$.

En particulier, chaque récepteur peut ainsi déduire le graphe d'interférence pour une transmission donnée et appliquer alors, dans un mode de réalisation, la méthode TIM.

Les valeurs de $\Gamma_0$ et $\tau_{thres}$ sont fixées préalablement, en fonction des enjeux et compromis choisis : par exemple $\Gamma_0 \in \{5\ dB, ...,10\ dB\}$ et $\tau_{thres} \in \{0.01, ...,0.1\}$ . Ces valeurs dépendent des capacités de la forme d'onde et en particulier de son ou ses points de fonctionnement visés.

En supposant par exemple que le canal est soumis à un évanouissement de Rayleigh, ce qui s'écrit plus formellement pour le canal associé au lien j→i: $h_{ij}$ - $\mathcal{CN}(0,\gamma_{ij})$, on peut démontrer que la probabilité d'outage du SINR peut s'écrire comme suit :

$$P\left(\mathrm{SINR}_{j \to i,k} > \Gamma_0\right) = \frac{\exp\left(-\dfrac{\Gamma_0 P_{noise}}{P_j \gamma_{ij}}\right)}{1 + \Gamma_0 \dfrac{P_k \gamma_{ik}}{P_j \gamma_{ij}}}$$

avec $\gamma_{ij} = \mathbb{E}\left[\left|h_{ij}\right|^2\right]$ et $\gamma_{ik} = \mathbb{E}[|h_{ik}|^2]$ .

Dans le cas d'un canal autre qu'un canal de Rayleigh (Rice etc.), la formule de la probabilité d'outage est adaptée en conséquence conformément aux modélisations connues des caractéristiques du canal. Pour obtenir son expression, des calculs similaires pour le canal de Rayleigh sont nécessaires. Sinon, il est possible d'approximer son expression numériquement par Monte-Carlo, c.-à-d. tirer un grand nombre de réalisations des canaux de propagations (> 10000 tirages), calculer les SINR instantanés associés, puis tracer l'histogramme des valeurs de ces SINR obtenus.

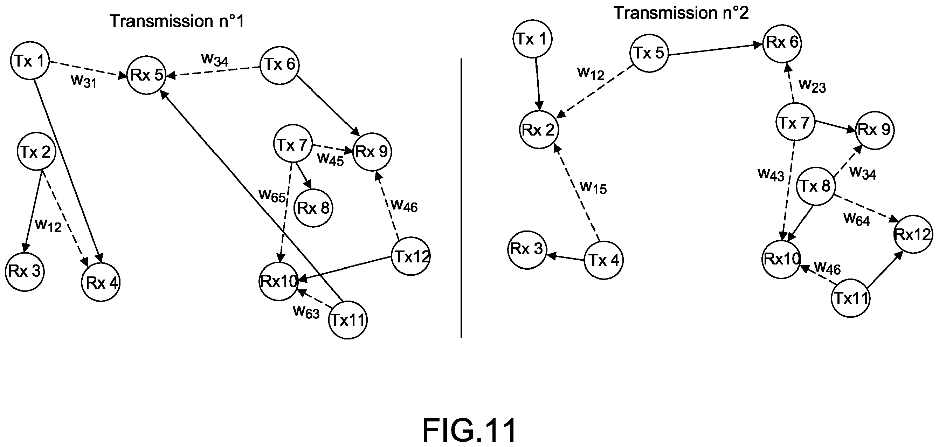

Un exemple de graphe d'interférence pour deux topologies de transmission distinctes (transmission n°1, transmission n°2) est montré sur la Figure 11. Les communications correspondant à la topologie de transmission (transmission directe) sont représentées par les flèches en trait plein ; les arêtes du graphe d'interférence, correspondant dont aux liens interférents forts, en trait pointillé. Les noeuds *i*, selon qu'ils sont en réception, respectivement en émission dans cette topologie, sont notés Rx *i*, respectivement Tx *i*. Tous les liens interférents (traits pointillés) n'ont pas été représentés pour la lisibilité du schéma.

Pour chaque topologie définissant les liens actifs $k \to i$, la connaissance du graphe d'interférence permet à partir du poids de l'arête du graphe correspondant au lien interférent de caractériser la qualité du lien sur la base du SINR pour réduire l'effet de l'interférence qu'il apporte (méthode TIM ou autre).

L'invention permet d'adresser le problème d'optimisation de l'ordonnancement de transmission pour sonder le réseau en mode TDD, avec des performances en termes du nombre de cycles meilleures que celles du TDMA, même pour des réseaux de petites tailles.

Dans un mode de réalisation, en outre un nouveau critère probabiliste du graphe d'interférence est défini à partir de l'estimation des paramètres statistiques du canal. L'avantage est qu'une fois les noeuds déployés, les paramètres statistiques du canal, et donc les probabilités d'outage du SINR pour chaque lien n'ont besoin d'être calculés qu'une seule fois pour une topologie fixe des noeuds. A partir de ces probabilités, le graphe d'interférence peut être calculé immédiatement.

Un autre avantage est le critère probabiliste qui est une modélisation plus robuste pour tenir compte de la variation aléatoire temporelle du canal et donc du SINR.

L'ordonnancement déterminé selon l'invention permet que chaque noeud reçoive une émission de tous les autres noeuds. La transmission se fait en broadcast (un noeud émet vers tous les autres noeuds) et sous l'hypothèse TDD (un noeud qui émet ne peut pas recevoir).

On notera que les cycles d'un ordonnancement de transmission déterminé selon l'invention ne sont pas ordonnés entre eux, en cela que les actions (transmissions) successives le composant peuvent être mises en oeuvre dans n'importe quel ordre dans l'étape 202. L'ordonnancement consiste à déterminer quels cycles devront se succéder, selon la séquence optimale de cycles, quel que soit leur ordre, ce qui a pour effet d'ordonnancer aussi les transmissions entre elles, chaque cycle fixant ceux des noeuds qui seront en émission simultanée et ceux des noeuds qui pendant ce même temps du cycle seront en réception.

L'invention s'applique tant dans l'hypothèse d'un canal mono-trajet que dans l'hypothèse d'un canal à trajets multiples. Dans le cas d'un canal à trajets multiples, il faut déterminer selon le type de modulation utilisé, une méthode pour estimer la probabilité d'outage de $SINR_{j \to i,k}$ pour une transmission utile du noeud *j* vers le noeud i, avec comme interférent le noeud k en prenant en compte les trajets multiples et les paramètres statistiques des canaux à trajets multiples, en fonction des puissances d'émission des noeuds. Comme précédemment, la probabilité d'outage indique si l'interférent est fort ou faible. Dans le cas particulier de l'orthogonal frequency-division multiplexing (OFDM) et d'un canal de Rayleigh à trajets multiples, une solution pour calculer cette probabilité d'outage sur $SINR_{j \to i,k}$ est décrite dans l'article [9].

Dans l'application exposée ci-dessus à titre d'exemple, le graphe d'interférence est utilisé pour mettre en oeuvre la méthode TIM. Dans d'autres modes de réalisation, le graphe d'interférence obtenu est exploité à d'autres fins, par exemple la définition de groupes/sous-groupes/clusters de noeuds ou encore l'allocation de ressources de communication (cf. [10]) etc.

Dans le mode de réalisation décrit ci-dessus en référence à la figure 2, l'ordonnancement des transmissions des noeuds tel que déterminé par l'invention a été utilisé pour évaluer les interférences respectives des noeuds sur les liens du réseau et en déduire le graphe d'interférences selon une approche probabiliste. Dans un autre mode de réalisation, une approche déterministe est utilisée à la place de l'approche probabiliste des étapes 203 et 204 pour élaborer un graphe d'interférence. Dans un encore autre mode de réalisation, les transmissions de l'étape 202 sont exploitées pour estimer les interférences de façon probabiliste ou au contraire déterministe, des actions telles qu'allocation de ressources ou définition de groupes/sous-groupes/clusters de noeuds etc. étant ensuite effectuées en fonction de ces estimations, en plus ou à la place de la détermination d'un graphe d'interférence ou de la méthode TIM.

**Références** :

[1] S. A. Jafar, "Topological interférence Management Through Index Coding," IEEE Transactions on Information Theory, vol. 60, no. 1, pp. 529-568, Jan. 2014, doi: 10.1109/TIT.2013.2285151 ;

[2] ] X. Leturc, P. Ciblat and C. J. Le Martret, "Estimation of the Ricean K-factor from noisy complex channel coefficients," 2016 50th Asilomar Conférence on Signais, Systems and Computers, 2016, pp. 1092-1096, doi: 10.1109/ACSSC.2016.7869538 ;

[3] X. Leturc et al., "Estimation of the Ricean K Factor in the Presence of Shadowing," in IEEE Communications Letters, vol. 24, no. 1, pp. 108-112, Jan. 2020, doi: 10.1109/LCOMM.2019.2950027 ;

[4] Young-Chai Ko and M. -. Alouini, "Estimation of Nakagami-m fading channel parameters with application to optimized transmitter diversity systems," in IEEE Transactions on Wireless Communications, vol. 2, no. 2, pp. 250-259, March 2003, doi: 10.1109/TWC.2003.808963 ;

[5] X. Leturc et al.: "Procédé et dispositif pour calculer des paramètres statistiques du canal de propagation", déposé le 19/12/2017, brevet FR3075548 B1 :
https://worldwide.espacenet.com/patent/search/family/062143219/publication/FR307 5548B1?q=FR1701324A ;

[6] V. M. DaSilva and E. S. Sousa, "Multicarrier orthogonal CDMA signais for quasisynchronous communication systems," in IEEE Journal on Selected Areas in Communications, vol. 12, no. 5, pp. 842-852, June 1994, doi: 10.1109/49.298058 ;

[7] K. Choi and H. Liu, "Polyphase Scrambled Walsh Codes for Zero-Correlation Zone Extension in QS-CDMA," in IEEE Communications Letters, vol. 16, no. 4, pp. 429-431, April 2012, doi: 10.1109/LCOMM.2011.112311.111380." ;

[8] J. -. van de Beek, O. Edfors, M. Sandell, S. K. Wilson and P. O. Borjesson, "On channel estimation in OFDM systems," 1995 IEEE 45th Vehicular Technology Conférence. Countdown to the Wireless Twenty-First Century, 1995, pp. 815-819 vol.2, doi: 10.1109/VETEC.1995.504981 ;

[9] J. Gaveau, C. J. Le Martret and M. Assaad, "Grouping of subcarriers and effective SNR statistics in wideband OFDM systems using EESM," 2017 IEEE 13th International Conférence on Wireless and Mobile Computing, Networking and Communications (WiMob), 2017, pp. 1-7, doi: 10.1109/WiMOB.2017.8115800 ;

[10] J. Cao et al., "Resource Allocation for Ultradense Networks With Machine-Learning-Based Interférence Graph Construction," in IEEE Internet of Things Journal, vol. 7, no. 3, pp. 2137-2151, March 2020, doi: 10.1109/JIOT.2019.2959232.

**Revendications**

1. Procédé d'ordonnancement des transmissions dans un réseau (100) de radiocommunication ad hoc de n noeuds d'indice 1, ..., n échangeant sur un canal de communication radio commun pour que chaque noeud reçoive une transmission de chacun des autres noeuds à l'issue de l'ordonnancement, le procédé comprenant, une opération de détermination de l'ordonnancement des transmissions $\mathcal{S}(n)$ selon des cycles tel que $\mathcal{S}(n) = \{\alpha_1, \alpha_2, \alpha_3 ...\}$ où le cycle $t$ comprend l'action $\alpha_t$ correspondant à : "les $m_t$ noeuds d'indice $j_{1_t}, ..., j_{m_t}$ du réseau émettent simultanément au cycle $t$ », représentée par l'expression $\alpha_t = (j_{1_t}, ..., j_{m_t})$, un noeud émettant vers tous les autres noeuds et un noeud ne pouvant émettre et recevoir en même temps ;

   ledit procédé étant **caractérisé en ce que** ladite opération mise en oeuvre dans un dispositif électronique d'ordonnancement (10) comprend les étapes suivantes consistant à, dans une première phase :

   - en considérant initialement le réseau de $n$ noeuds, déterminer l'action $\alpha_1$ du premier cycle telle que

   $$\alpha_1 = \left(1, ..., \left\lceil \frac{n}{2} \right\rceil\right)$$ et l'action $\alpha_2$ du deuxième cycle telle que $$\alpha_2 = \left(\left\lceil \frac{n}{2} \right\rceil + 1, ..., n\right)$$ où $\left\lceil \frac{n}{2} \right\rceil$ est la partie entière supérieure de $\frac{n}{2}$ ) ; puis

   - itérer la précédente étape, mais sur le sous-réseau de noeuds $\left\{1, ..., \left\lceil \frac{n}{2} \right\rceil\right\}$ de taille $\left\lceil \frac{n}{2} \right\rceil$ à la place du réseau initial de $n$ noeuds d'une part, ce qui détermine les émissions d'un premier cycle et d'un deuxième cycle pour ce sous-réseau de noeuds et itérer également la précédente étape sur le sous-réseau de noeuds $\left\{\left\lceil \frac{n}{2} \right\rceil +1, ..., n\right\}$ de taille $\left\lfloor \frac{n}{2} \right\rfloor$ à la place du réseau initial de $n$ noeuds, ce qui détermine les émissions d'un premier cycle et d'un deuxième cycle pour ce sous-réseau de noeuds ; déterminer l'action $\alpha_3$ de $\mathcal{S}(n)$ comme la réunion des émissions des premiers cycles déterminés pour les deux sous-réseaux et déterminer l'action $\alpha_4$ de $\mathcal{S}(n)$ comme la réunion des émissions des deuxièmes cycles déterminés pour les deux sous-réseaux ; et
   - tant que la taille des sous-réseaux est supérieure à un seuil Pmin, renouveller ces étapes de manière récursive, telle qu'à l'issue de la r$^{\text{ième}}$ itération, l'action $\alpha_{2r-1}$ de $\mathcal{S}(n)$ est déterminée comme la réunion des émissions des premiers cycles déterminées pour les $2^{r-1}$ sous-réseaux considérés et l'action $\alpha_{2r}$ de $\mathcal{S}(n)$ est déterminée comme la réunion des émissions des deuxièmes cycles déterminés pour lesdits $2^{r-1}$ sous-réseaux ; et

   quand la taille, n', des sous-réseaux considérés devient inférieure ou égale à Pmin, les actions $\alpha_1, ..., \alpha_T$, de $\mathcal{S}(n)$ ayant alors été déterminées, ladite opération comprend les étapes suivantes consistant à, dans une deuxième phase :

   - pour chacun des N' sous-réseaux considérés de taille n', N' étant le nombre de sous-réseaux considérés, déterminer un ordonnancement de transmission vérifiant les règles suivantes :
   dans cet ordonnancement, chaque noeud du sous-réseau considéré doit émettre lors de deux cycles exactement ; et lorsque 2 noeuds émettent en même temps dans le même cycle, ceux-ci ne peuvent pas émettre à nouveau en même temps dans l'autre cycle;
   - soit $\{\beta_{j1}, ..., \beta_{jL}\}$ l'ordonnancement ainsi obtenu pour chaque sous-réseau j, j=1 à N', avec L =
   $$L = \left\lceil \frac{1+\sqrt{1+8n'}}{2} \right\rceil$$ , alors pour $k = 1$ à L, les actions $\alpha_{T'+k}$ de S(n) sont alors déterminées comme la réunion, de $j = 1$ à N', des actions $\beta_{jk}$, soit :

$$\alpha_{T'+1} = \{\beta_{11}, \ldots, \beta_{N'1}\} \; ; \; \alpha_{T'+2} = \{\beta_{12}, \ldots, \beta_{N'2}\} \; ; \; \ldots \; ; \; \alpha_{T'+L} = \{\beta_{1L}, \ldots, \beta_{N'L}\} \; ;$$

l'ordonnancement des transmissions résultant de l'opération de détermination étant $S(n) = \{\alpha_1, \alpha_2, \alpha_3 \ldots, \alpha_{T'}, \alpha_{T'+1}, \ldots, \alpha_{T'+L}\}$ ;
selon lequel :

- les actions $\alpha_t$ sont mises en oeuvre successivement par les noeuds, tels que lors de chaque cycle t, t = 1 à T'+L défini dans l'ordonnancement $S(n)$, avec $\alpha_t = (j_{1_t}, \ldots, j_{m_t})$ : les noeuds $j_{1_t}, \ldots, j_{m_t}$ du réseau (100) émettent simultanément des séquences orthogonales respectives affectées respectivement auxdits noeuds et chaque noeud $i$ du réseau autre que $j_{1_t}, \ldots, j_{m_t}$ obtient un signal depuis chaque noeud $j_{1_t}, \ldots, j_{m_t}$ en fonction des séquences orthogonales affectées auxdits noeuds $j_{1_t}, \ldots, j_{m_t}$ et estime, en fonction dudit signal depuis chaque noeud $j_{1_t}, \ldots, j_{m_t}$, le canal du lien radio depuis ledit noeud vers i.

2. Procédé d'ordonnancement des transmissions dans un réseau (100) de radiocommunication ad hoc de n noeuds selon la revendication 1, comprenant une étape de transmission aux noeuds du réseau dudit ordonnancement ou au moins une étape de transmission à chaque noeud de l'indication de son ordre d'émission associé à son identifiant conformément audit ordonnancement sans faire figurer l'indication des cycles auxquels les autres noeuds doivent émettre conformément audit ordonnancement.

3. Procédé d'ordonnancement des transmissions dans un réseau (100) de radiocommunication ad hoc de $n$ noeuds selon la revendication 1 ou 2, comprenant une étape d'évaluation de l'interférence apportée par un noeud $k$ sur un lien radio depuis un noeud $j$ vers un noeud $i$, avec $i$, respectivement, $j$, respectivement $k \in [1, n]$ et $k \neq i, j$, selon laquelle :

   - à partir desdites estimations de canal, le noeud $i$ détermine les paramètres statistiques du canal du lien radio du noeud $j$ vers le noeud $i$, représenté par la notation $j \rightarrow i$, pour tous noeuds $j \neq i$ ;
   - à partir des paramètres statistiques déterminées du canal des liens radio, calcul dans les noeuds des probabilités $P(\mathrm{SINR}_{j \rightarrow i, k} > \Gamma_0)$, c.-à-d. de la probabilité que le rapport Signal à bruit plus interférence en réception du noeud i pour une transmission utile du noeud $j$ vers le noeud $i$, avec comme interférent le noeud k, soit supérieur à un seuil fixé $\Gamma_0$.

4. Procédé d'ordonnancement des transmissions dans un réseau (100) de radiocommunication ad hoc de n noeuds selon la revendication précédente, selon lequel un graphe d'interférence est élaboré par un noeud en mettant en oeuvre les étapes suivantes :

   - identifier les interférences vérifiant la condition $P(\mathrm{SINR}_{j \rightarrow i, k} > \Gamma_0) < \tau_{thres}$ où $\tau_{thres}$ est un seuil prédéfini ;
   - les liens correspondant aux interférences identifiées sont tracés, à l'exclusion des liens ne vérifiant pas ladite condition, définissant ainsi les arêtes du graphe ;
   - un poids est affecté à chaque arête ainsi définie correspondant à un lien interférant, en vue de diminuer l'effet de l'interférence provenant d'un noeud $k$ une transmission $j \rightarrow i$ en fonction dudit poids : pour une transmission $j \rightarrow i$, le poids du lien interférent $k \rightarrow i$ vaut $w_{ik} = P(\mathrm{SINR}_{j \rightarrow i, k} < \Gamma_0)$.

5. Réseau (100) de communication ad hoc de n noeuds d'indice 1, ..., n adaptés pour échanger sur un canal de communication radio commun, ledit réseau comprenant un dispositif (10) d'ordonnancement des transmissions dans ledit réseau (100) de radiocommunication ad hoc, ledit dispositif (10) étant adapté pour déterminer un ordonnancement des transmissions $S(n)$ selon des cycles tel que $S(n) = \{\alpha_1, \alpha_2, \alpha_3 \ldots\}$ où le cycle t comprend l'action $\alpha_t$ correspondant à : "les $m_t$ noeuds d'indice $j_{1_t}, \ldots, j_{m_t}$ du réseau émettent simultanément au cycle t », représentée par l'expression $\alpha_t = (j_{1_t}, \ldots, j_{m_t})$, tel que chaque noeud reçoive une transmission de chacun des autres noeuds à l'issue dudit ordonnancement ;

   un noeud étant adapté pour émettre vers tous les autres noeuds et un noeud étant adapté pour ne pouvoir émettre et recevoir en même temps ;

   ledit dispositif (10) étant adapté pour dans une première phase, en considérant initialement le réseau de n

noeuds, déterminer l'action $\alpha_1$ du premier cycle tel que $\alpha_1 = \left(1, ..., \left\lceil\frac{n}{2}\right\rceil\right)$ et l'action $\alpha_2$ du deuxième cycle

tel que $\alpha_2 = \left(\left\lceil\frac{n}{2}\right\rceil + 1, ..., n\right)$ où $\left\lceil\frac{n}{2}\right\rceil$ est la partie entière supérieure de $n/2$), puis pour itérer l'opération, mais sur le sous-réseau de noeuds $\left\{1, ..., \left\lceil\frac{n}{2}\right\rceil\right\}$ de taille $\left\lceil\frac{n}{2}\right\rceil$ à la place du réseau initial de n noeuds d'une part, le dispositif déterminant ainsi les émissions d'un premier cycle et d'un deuxième cycle pour ce sous-réseau de noeuds et pour itérer également la précédente opération sur le sous-réseau de noeuds $\left\{\left\lceil\frac{n}{2}\right\rceil + 1, ..., n\right\}$

de taille $\left\lceil\frac{n}{2}\right\rceil$ à la place du réseau initial de $n$ noeuds, ce qui détermine les émissions d'un premier cycle et un deuxième cycle pour ce sous-réseau de noeuds ; le dispositif est adapté pour déterminer l'action $\alpha_3$ de $\mathcal{S}(n)$ comme la réunion des émissions des premiers cycles déterminés pour les deux sous-réseaux et pour déterminer l'action $\alpha_4$ de $\mathcal{S}(n)$ comme la réunion des émissions des deuxièmes cycles déterminés pour les deux sous-réseaux ; et

le dispositif (10) est adapté pour, tant que la taille des sous-réseaux est supérieure à un seuil Pmin, renouveler ces étapes de manière récursive, pour ainsi déterminer, à l'issue de la r$^{\text{ième}}$ itération, l'action $\alpha_{2r-1}$ de $\mathcal{S}(n)$ comme la réunion des émissions des premiers cycles déterminées pour les 2$^{r-1}$ sous-réseaux considérés et l'action $\alpha_{2r}$ de $\mathcal{S}(n)$ comme la réunion des émissions des deuxièmes cycles déterminés pour lesdits 2$^{r-1}$ sous-réseaux ; et

le dispositif (10) est adapté pour, quand la taille, n', des sous-réseaux considérés devient inférieure ou égale à un seuil fixé Pmin, les actions $\alpha_1, ..., \alpha_T$, de $\mathcal{S}(n)$ ayant alors été déterminées, dans une deuxième phase, déterminer pour chacun des N' sous-réseaux considérés de taille n', N' étant le nombre de sous-réseaux considérés, un ordonnancement de transmission vérifiant les règles suivantes :

dans cet ordonnancement, chaque noeud du sous-réseau considéré doit émettre lors de deux cycles exactement ; et lorsque 2 noeuds émettent en même temps dans le même cycle, ceux-ci ne peuvent pas émettre à nouveau en même temps dans l'autre cycle ;

$$L = \left\lceil \frac{1 + \sqrt{1 + 8n'}}{2} \right\rceil$$

soit $\{\beta_{j1}, ..., \beta_{jL}\}$ l'ordonnancement ainsi obtenu pour chaque sous-réseau $j, j = 1$ à N', avec

, alors pour k = 1 à L, le dispositif (10) est adapté pour déterminer l'action $\alpha_{T'+k}$ de $\mathcal{S}(n)$ comme la réunion, de j=1 à N', des actions $\beta_{jk}$, soit :

$$\alpha_{T'+1} = \{\beta_{11}, ..., \beta_{N'1}\} \; ; \; \alpha_{T'+2} = \{\beta_{12}, ..., \beta_{N'2}\} \; ; \; ... \; ; \; \alpha_{T'+L} = \{\beta_{1L}, ..., \beta_{N'L}\} \; ;$$

l'ordonnancement des transmissions résultant de l'opération de détermination étant

$$\mathcal{S}(n) = \{\alpha_1, \alpha_2, \alpha_3 ..., \alpha_{T'}, \alpha_{T'+1}, ..., \alpha_{T'+L}\}.$$

ledit réseau (100) de communication étant adapté pour mettre en oeuvre successivement les actions $\alpha_t$ et dans lequel, lors de chaque cycle t, $t = 1$ à T'+L défini dans l'ordonnancement $\mathcal{S}(n)$, avec $\alpha_t = (j_{1_t}, ..., j_{m_t})$, les noeuds $j_{1_t}, ..., j_{m_t}$ du réseau sont adaptés pour émettre simultanément des séquences orthogonales respectives affectées respectivement auxdits noeuds et chaque noeud $i$ du réseau autre que $j_{1_t}, ..., j_{m_t}$ est adapté pour obtenir un signal depuis chaque noeud $j_{1_t}, ..., j_{m_t}$ en fonction des séquences orthogonales affectées auxdits noeuds $j_{1_t}, ...,$

$j_{m_t}$ et estimer, en fonction dudit signal depuis chaque noeud $j_{1_t}$, ..., $j_{m_t}$, le canal du lien radio depuis ledit noeud vers $i$.

6. Réseau (100) ad hoc de noeuds selon la revendication 5, dans lequel à partir desdites estimations de canal, le noeud i est adapté pour déterminer les paramètres statistiques du canal du lien radio du noeud $j$ vers le noeud $i$, représenté par la notation $j \rightarrow i$, pour tous noeuds $j \neq i$ et pour calculer, à partir des paramètres statistiques déterminées du canal des liens radio, les probabilités $P(\text{SINR}_{j \rightarrow i,k} > \Gamma_0)$, c.-à-d. la probabilité que le rapport Signal à bruit plus interférence en réception du noeud $i$ pour une transmission utile du noeud $j$ vers le noeud $i$, avec comme interférent le noeud k, soit supérieur à un seuil fixé $\Gamma_0$.

**Patentansprüche**

1. Verfahren zur Planung der Übertragungen in einem Ad-hoc-Funkkommunikationsnetz (100) von $n$ Knoten mit dem Index 1, ..., $n$, die sich auf einem gemeinsamen Funkkommunikationskanal austauschen, so dass jeder Knoten am Ende der Planung eine Übertragung von jedem der anderen Knoten erhält, wobei das Verfahren einen Vorgang zum Bestimmen der Planung der Übertragungen $S(n)$ gemäß Zyklen umfasst, so dass $S(n) = \{\alpha_1, \alpha_2, \alpha_3 ...\}$, wobei der Zyklus $t$ die Aktion $\alpha_t$ umfasst, entsprechend: "die $m_t$ Knoten mit dem Index $j_{1_t}$, ..., $j_{m_t}$ des Netzes senden gleichzeitig im Zyklus $t$", dargestellt durch die Expression $\alpha_t = (j_{1_t}, ..., j_{m_t})$, wobei ein Knoten an alle anderen Knoten überträgt und ein Knoten nicht gleichzeitig senden und empfangen kann;

wobei das Verfahren **dadurch gekennzeichnet ist, dass** der in einer elektronischen Planungsvorrichtung (10) implementierte Vorgang die folgenden Schritte umfasst, die in einer ersten Phase bestehen aus:

- zunächst unter Berücksichtigung des Netzes von $n$ Knoten, Bestimmen der Aktion $\alpha_1$ des ersten Zyklus,

so dass $\alpha_1 = \left(1, ..., \left\lceil \frac{n}{2} \right\rceil\right)$, und der Aktion $\alpha_2$ des zweiten Zyklus, so dass $\alpha_2 = \left(\left\lceil \frac{n}{2} \right\rceil + 1, ..., n\right)$,

wobei $\left\lceil \frac{n}{2} \right\rceil$ der obere ganze Teil von $\frac{n}{2}$) ist; und dann

- Wiederholen des vorausgehenden Schritts, jedoch an dem Unternetz von Knoten $\left\{1, ..., \left\lceil \frac{n}{2} \right\rceil\right\}$ der Größe $\left\lceil \frac{n}{2} \right\rceil$ an Stelle von dem anfänglichen Netz von $n$ Knoten einerseits, wodurch die Sendungen eines ersten Zyklus und eines zweiten Zyklus für dieses Unternetz von Knoten bestimmt werden, und auch Wiederholen des vorausgehenden Schritts an dem Unternetz von Knoten $\left\{\left\lceil \frac{n}{2} \right\rceil + 1, ..., n\right\}$ der Größe $\left\lfloor \frac{n}{2} \right\rfloor$ an Stelle von dem anfänglichen Netz von $n$ Knoten, wodurch die Sendungen eines ersten Zyklus und eines zweiten Zyklus für dieses Unternetz von Knoten bestimmt werden, und Bestimmen der Aktion $\alpha_3$ von $S(n)$ als die Gruppierung der Sendungen der ersten Zyklen, die für die zwei Unternetze bestimmt worden sind, und Bestimmen der Aktion $\alpha_4$ von $S(n)$ als die Gruppierung der Sendungen der zweiten Zyklen, die für die zwei Unternetze bestimmt worden sind; und

- solange die Größe der Unternetze größer als ein Schwellenwert Pmin ist, rekursives Erneuern dieser Schritte, so dass am Ende der r-ten Wiederholung die Aktion $\alpha_{2r-1}$ von $S(n)$ als die Gruppierung der Sendungen der ersten Zyklen, die für die betreffenden $2^{r-1}$ Unternetze bestimmt worden sind, bestimmt wird, und die Aktion $\alpha_{2r}$ von $S(n)$ als die Gruppierung der Sendungen der zweiten Zyklen bestimmt wird, die für die $2^{r-1}$ Unternetze bestimmt worden sind; und

wenn die Größe, $n'$, der berücksichtigten Unternetze kleiner oder gleich Pmin wird, wobei die Aktionen $\alpha_1$, ..., $\alpha_T$, von $S(n)$ bereits bestimmt worden sind, umfasst der Vorgang die folgenden Schritte, die in einer zweiten Phase bestehen aus:

- für jedes der berücksichtigten N' Unternetze mit der Größe n', wobei N' die Anzahl der berücksichtigten Unternetze ist, Bestimmen einer Übertragungsplanung, die die folgenden Regeln befolgt:
bei dieser Planung muss jeder Knoten des berücksichtigten Unternetzes während genau zwei Zyklen senden; und wenn 2 Knoten gleichzeitig im gleichen Zyklus senden, können diese nicht erneut gleichzeitig in dem anderen Zyklus senden;

- wobei $\{\beta_{j1}, ..., \beta_{jL}\}$ die somit für jedes Unternetz j erhaltene Planung ist, j = 1 bis N', wobei $L = \left\lceil \frac{1+\sqrt{1+8n'}}{2} \right\rceil$

, dann werden für $k$ = 1 bis L die Aktionen $\alpha_{T'+k}$ von $\mathcal{S}(n)$ als die Gruppierung bestimmt, von j = 1 bis N', der Aktionen $\beta_{jk}$, wobei

$$\alpha_{T'+1} = \{\beta_{11}, ..., \beta_{N'1}\} \, ; \, \alpha_{T'+2} = \{\beta_{12}, ..., \beta_{N'2}\} \, ; \, ... \, ; \, \alpha_{T'+L} = \{\beta_{1L}, ..., \beta_{N'L}\};$$

wobei die Planung der Übertragungen, die sich aus dem Bestimmungsvorgang ergibt, $\mathcal{S}(n) = \{\alpha_1, \alpha_2, \alpha_3 ..., \alpha_{T'+1}, ..., \alpha_{T'+L}\}$ ist;
gemäß welcher:

- die Aktionen $\alpha_t$ nacheinander von den Knoten implementiert werden, so dass bei jedem Zyklus t, t = 1 bis T'+L, definiert in der Planung S(n), wobei $\alpha_t = (j_{1t}, ..., j_{m_t})$: die Knoten $j_{1t}, ..., j_{m_t}$ des Netzes (100) gleichzeitig jeweilige orthogonale Sequenzen senden, die den Knoten jeweils zugewiesen sind, und jeder andere Knoten i des Netzes als der Knoten $j_{1t}, ..., j_{m_t}$ von jedem Knoten $j_{1t}, ..., j_{m_t}$ basierend auf den den Knoten $j_{1t}, ..., j_{m_t}$ zugewiesenen orthogonalen Sequenzen ein Signal erhält und basierend auf dem Signal von jedem Knoten $j_{1t}, ..., j_{m_t}$ den Funkverbindungskanal von dem Knoten zu i schätzt.

2. Verfahren zur Planung von Übertragungen in einem Ad-hoc-Funkkommunikationsnetz (100) von n Knoten nach Anspruch 1, umfassend einen Schritt zum Übertragen der Planung an die Knoten des Netzes oder mindestens einen Schritt zum Übertragen, an jeden Knoten, der Angabe seiner Sendungsreihenfolge, die gemäß der Planung seiner Kennung zugeordnet ist, ohne die Angabe der Zyklen einzuschließen, in denen die anderen Knoten gemäß der Planung senden müssen.

3. Verfahren zur Planung von Übertragungen in einem Ad-hoc-Funkkommunikationsnetz (100) von n Knoten nach Anspruch 1 oder 2, umfassend einen Schritt zum Auswerten der von einem Knoten $k$ in eine Funkverbindung von einem Knoten $j$ zu einem Knoten $i$ eingebrachten Interferenz, wobei $i$ bzw. $j$ bzw. $k \in [1, n]$ und $k \neq i, j$, gemäß welcher:

- anhand der Kanalschätzungen der Knoten $i$ die statistischen Parameter des Funkverbindungskanals des Knotens $j$ zum Knoten $i$ bestimmt, dargestellt durch die Notation $j \rightarrow i$, für alle Knoten $j \neq i$;
- anhand der bestimmten statistischen Parameter des Funkverbindungskanals, Berechnen, in den Knoten, der Wahrscheinlichkeiten $P(\text{SINR}_{j \rightarrow i,k} > \Gamma_0)$, das heißt der Wahrscheinlichkeit, dass das Signal-Rausch-Verhältnis plus dem Interferenzverhältnis bei Empfang des Knotens i für eine Nutzübertragung des Knotens $j$ zum Knoten i, mit dem Knoten k als Störer, größer als ein feststehender Schwellenwert $\Gamma_0$ ist.

4. Verfahren zur Planung von Übertragungen in einem Ad-hoc-Funkkommunikationsnetz (100) von n Knoten nach dem vorhergehenden Anspruch, gemäß welchem von einem Knoten ein Interferenzdiagramm durch Implementieren der folgenden Schritte erzeugt wird:

- Identifizieren der Interferenzen, die die Bedingung $P(\text{SINR}_{j \rightarrow i,k} > \Gamma_0) < \tau_{thres}$ erfüllen, wobei $\tau_{thres}$ ein vorbestimmter Schwellenwert ist;
- die den identifizierten Interferenzen entsprechenden Verbindungen werden aufgezeichnet, mit Ausnahme der Verbindungen, die die Bedingung nicht erfüllen, wodurch die Kanten des Diagramms definiert werden;
- jeder somit definierten Kante wird ein Gewicht zugewiesen, das einer störenden Verbindung entspricht, im Hinblick auf das Reduzieren der Interferenzwirkung, die von einem Knoten $k$ stammt, eine Übertragung $j \rightarrow i$ auf Basis des Gewichts: für eine Übertragung $j \rightarrow i$ beträgt das Gewicht der störenden Verbindung $k \rightarrow i$ $w_{ik} = P(\text{SINR}_{j \rightarrow i,k} < \Gamma_0)$.

5. Ad-hoc-Kommunikationsnetz (100) von n Knoten mit dem Index 1, ..., $n$, die dafür geeignet sind, sich auf einem gemeinsamen Funkkommunikationskanal auszutauschen, wobei das Netz eine Vorrichtung (10) zur Planung von Übertragungen in dem Ad-hoc-Funkkommunikationsnetz (100) umfasst, wobei die Vorrichtung (10) dafür geeignet ist, eine Planung der Übertragungen $\mathcal{S}(n)$ gemäß Zyklen zu bestimmen, so dass $\mathcal{S}(n) = \{\alpha_1, \alpha_2, \alpha_3 ...\}$, wobei der Zyklus $t$ die Aktion $\alpha_t$ umfasst, entsprechend: "die $m_t$ Knoten mit dem Index $j_{1_t}, ..., j_{m_t}$ des Netzes senden gleichzeitig im Zyklus t", dargestellt durch die Expression $\alpha_t = (j_{1_t}, ..., j_{m_t})$, so dass am Ende der Planung jeder Knoten eine Übertragung von jedem der anderen Knoten empfängt;

wobei ein Knoten dafür geeignet ist, an alle anderen Knoten zu senden, und ein Knoten dafür geeignet ist, nicht gleichzeitig senden und empfangen zu können;

wobei die Vorrichtung (10) dafür geeignet ist, in einer ersten Phase unter anfänglicher Berücksichtigung des Netzes von $n$ Knoten, die Aktion $\alpha_1$ des ersten Zyklus zu bestimmen, so dass $\alpha_1 = \left(1, ..., \left\lceil\frac{n}{2}\right\rceil\right)$, und die Aktion $\alpha_2$ des zweiten Zyklus zu bestimmen, so dass $\alpha_2 = \left(\left\lceil\frac{n}{2}\right\rceil + 1, ..., n\right)$, wobei $\left\lceil\frac{n}{2}\right\rceil$ der obere ganze Teil von $n/2$ ist, dann, den Vorgang zu wiederholen, jedoch an dem Unternetz von Knoten $\left\{1, ..., \left\lceil\frac{n}{2}\right\rceil\right\}$ der Größe $\left\lceil\frac{n}{2}\right\rceil$ an Stelle von dem anfänglichen Netz von $n$ Knoten einerseits, wobei die Vorrichtung so die Sendungen eines ersten Zyklus und eines zweiten Zyklus für dieses Unternetz von Knoten bestimmt, und ebenfalls, den vorausgehenden Vorgang an dem Unternetz von Knoten $\left\{\left\lceil\frac{n}{2}\right\rceil+1, ..., n\right\}$ der Größe $\left\lceil\frac{n}{2}\right\rceil$ an Stelle von dem anfänglichen Netz von $n$ Knoten zu wiederholen, wodurch die Sendungen eines ersten Zyklus und eines zweiten Zyklus für dieses Unternetz von Knoten bestimmt werden; die Vorrichtung ist zum Bestimmen der Aktion $\alpha_3$ von $\mathcal{S}(n)$ als Gruppierung der Sendungen der ersten Zyklen, die für die zwei Unternetze bestimmt worden sind, und zum Bestimmen der Aktion $\alpha_4$ von $\mathcal{S}(n)$ als die Gruppierung der Sendungen der zweiten Zyklen, die für die zwei Unternetze bestimmt worden sind, geeignet; und

die Vorrichtung (10) ist dafür geeignet, solange die Größe der Unternetze größer als ein Schwellenwert Pmin ist, diese Schritte rekursiv zu erneuern, um somit am Ende der r-ten Wiederholung die Aktion $\alpha_{2r-1}$ von $\mathcal{S}(n)$ als die Gruppierung der Sendungen der ersten Zyklen zu bestimmen, die für die berücksichtigten $2^{r-1}$ Unternetze bestimmt worden sind, und die Aktion $\alpha_{2r}$ von $\mathcal{S}(n)$ als die Gruppierung der Sendungen der zweiten Zyklen zu bestimmen, die für die $2^{r-1}$ Unternetze bestimmt worden sind; und

die Vorrichtung (10) ist dafür geeignet, wenn die Größe $n'$ der berücksichtigten Unternetze kleiner oder gleich einem feststehenden Schwellenwert Pmin wird, wobei die Aktionen $\alpha_1, ..., \alpha_T$ von $\mathcal{S}(n)$ dann bestimmt worden sind, in einer zweiten Phase für jedes der berücksichtigten N' Unternetze mit der Größe $n'$, wobei N' die Zahl der berücksichtigten Unternetze ist, eine Übertragungsplanung zu bestimmen, die die folgenden Regeln befolgt:

bei dieser Planung muss jeder Knoten des berücksichtigten Unternetzes während genau zwei Zyklen senden; und wenn 2 Knoten gleichzeitig im gleichen Zyklus senden, können diese nicht erneut gleichzeitig in dem anderen Zyklus senden;

wobei $\{\beta_{j1}, ..., \beta_{jL}\}$ die somit für jedes Unternetz $j$ erhaltene Planung ist, $j$ = 1 bis N', wobei $L = \left\lceil\frac{1+\sqrt{1+8n'}}{2}\right\rceil$, dann für k = 1 bis L, die Vorrichtung (10) dafür geeignet ist, die Aktion $\alpha_{T'+k}$ von $\mathcal{S}(n)$ als Gruppierung, von j = 1 bis N', der Aktionen $\beta_{jk}$ zu bestimmen, wobei:

$$\alpha_{T'+1} = \{\beta_{11}, ..., \beta_{N'1}\} \; ; \; \alpha_{T'+2} = \{\beta_{12}, ..., \beta_{N'2}\} \; ; \; ... \; ; \; \alpha_{T'+L} = \{\beta_{1L}, ..., \beta_{N'L}\};$$

wobei die Planung der Übertragungen, die sich aus dem Bestimmungsvorgang ergeben, Folgende ist: $\mathcal{S}(n) = \{\alpha_1, \alpha_2, \alpha_3 ..., \alpha_{T'}, \alpha_{T'+1}, ..., \alpha_{T'+L}\}$,

wobei das Kommunikationsnetz (100) dafür geeignet ist, nacheinander die Aktionen $\alpha_t$ zu implementieren,

und wobei bei jedem Zyklus t, $t$ = 1 bis T'+L, der in der Planung $\mathcal{S}(n)$ definiert ist, wobei $\alpha_t = (j_{1_t}, ..., j_{m_t})$, die Knoten $j_{1_t}, ...,j_{m_t}$ des Netzes dafür geeignet sind, gleichzeitig jeweilige orthogonale Sequenzen zu senden, die jeweils den Knoten zugewiesen sind, und jeder andere Knoten $i$ des Netzes als die Knoten $j_{1_t}, ..., j_{m_t}$ dafür geeignet ist, ein Signal von jedem Knoten $j_{1_t}, ..., j_{m_t}$ basierend auf den den Knoten $j_{1_t}, ..., j_{m_t}$ zugewiesenen orthogonalen Sequenzen zu erhalten, und basierend auf dem Signal von jedem Knoten $j_{1_t}, ..., j_{m_t}$ den Funkverbindungskanal von dem Knoten zu $i$ zu schätzen.

**6.** Ad-hoc-Netz (100) von Knoten nach Anspruch 5, wobei anhand der Kanalschätzungen der Knoten i dafür geeignet ist, die statistischen Parameter des Funkverbindungskanals des Knotens $j$ zum Knoten $i$ zu bestimmen, der durch die Notation $j \rightarrow i$ dargestellt ist, für alle Knoten $j \neq i$, und anhand der bestimmten statistischen Parameter des Funkverbindungskanals die Wahrscheinlichkeiten $P(\text{SINR}_{j \rightarrow i,k} > \Gamma_0)$, das heißt die Wahrscheinlichkeit, dass das Signal-Rausch-Verhältnis plus dem Interferenzverhältnis bei Empfang des Knotens $i$ für eine Nutzübertragung des Knotens $j$ zum Knoten $i$, wobei der Knoten k der Störer ist, größer als ein feststehender Schwellenwert $\Gamma_0$ ist, zu berechnen.

**Claims**

**1.** A method for scheduling the transmissions in an ad-hoc radio communication network (100) of $n$ nodes of index 1, ..., $n$ exchanging on a common radio communication channel so that each node receives a transmission from each of the other nodes at the end of the scheduling, the method comprising an operation of determining the transmission scheduling $S(n)$ in cycles such that $\mathcal{S}(n) = \{\alpha_1, \alpha_2, \alpha_3 ...\}$, where the cycle $t$ comprises the action $\alpha_t$ corresponding to: "the $m_t$ nodes of index $j_{1_t}, ..., j_{m_t}$ of the network emit simultaneously to cycle $t$", represented by the expression $\alpha_t = (i_{1_t}, ..., j_{m_t})$, a node transmitting to all of the other nodes and a node not being able to emit and receive at the same time;

said method being **characterised in that** said operation implemented in an electronic scheduling device (10) comprises the following steps of, in a first phase:

- initially considering the network of $n$ nodes, determining the action $\alpha_1$ of the first cycle such that $\alpha_1 = \left(1, ..., \left\lceil \frac{n}{2} \right\rceil\right)$ and the action $\alpha_2$ of the second cycle such that $\alpha_2 = \left(\left\lceil \frac{n}{2} \right\rceil + 1, ..., n\right)$ where $\left\lceil \frac{n}{2} \right\rceil$ is the upper integer part of $\frac{n}{2}$ ); and then

- iterating the previous step, but on the subnetwork of nodes $\left\{1, ..., \left\lceil \frac{n}{2} \right\rceil\right\}$ of size $\left\lceil \frac{n}{2} \right\rceil$ instead of the initial network of $n$ nodes, on the one hand, thereby determining the emissions of a first cycle and of a second cycle for this subnetwork of nodes, and also iterating the previous step on the subnetwork of nodes $\left\{\left\lceil \frac{n}{2} \right\rceil + 1, ...,n\right\}$ of size $\left\lceil \frac{n}{2} \right\rceil$ instead of the initial network of $n$ nodes, thereby determining the emissions of a first cycle and of a second cycle for this subnetwork of nodes; determining the action $\alpha_3$ of $\mathcal{S}(n)$ as the grouping of the emissions of the first cycles determined for the two subnetworks and determining the action $\alpha_4$ of $\mathcal{S}(n)$ as the grouping of the emissions of the second cycles determined for the two subnetworks; and

- as long as the size of the subnetworks is greater than a threshold Pmin, repeating these steps recursively, such that, at the end of the $r^{th}$ iteration, the action $\alpha_{2r-1}$ of $\mathcal{S}(n)$ is determined as the grouping of the emissions of the first cycles determined for the $2^{r-1}$ subnetworks under consideration and the action $\alpha_{2r}$ of $\mathcal{S}(n)$ is determined as the grouping of the emissions of the second cycles determined for said $2^{r-1}$ subnetworks; and

when the size, $n'$, of the subnetworks under consideration becomes less than or equal to Pmin, with the actions $\alpha_1, ..., \alpha_T$, of $\mathcal{S}(n)$ then having been determined, said operation comprises the following steps of, in a second phase:

- for each of the N' subnetworks under consideration of size n', N' being the number of subnetworks under consideration, determining a transmission scheduling that satisfies the following rules:
in this scheduling, each node of the subnetwork under consideration has to emit during exactly two cycles; and when 2 nodes emit at the same time in the same cycle, these may not emit again at the same time in the other cycle;
- with $\{\beta_{j1}, ..., \beta_{jL}\}$ being the scheduling thus obtained for each subnetwork j, j=1 to N', where

$$L = \left\lceil \frac{1+\sqrt{1+8n\prime}}{2} \right\rceil$$, then, for $k$ = 1 to L, the actions $\alpha_{T\prime+k}$ of $S(n)$ are then determined as the grouping, from $j$ = 1 to N', of the actions $\beta_{jk}$, with:

$$\alpha_{T\prime+1} = \{\beta_{11}, ..., \beta_{N\prime 1}\} ; \alpha_{T\prime+2} = \{\beta_{12}, ..., \beta_{N\prime 2}\} ; ... ; \alpha_{T\prime+L} = \{\beta_{1L}, ..., \beta_{N\prime L}\};$$

the transmission scheduling resulting from the determination operation being

$$\mathcal{S}(n) = \{\alpha_1, \alpha_2, \alpha_3 ..., \alpha_{T\prime}, \alpha_{T\prime+1}, ..., \alpha_{T\prime+L}\};$$

according to which:

- the actions $\alpha_t$ are implemented successively by the nodes such that, in each cycle t, t = 1 to T'+L defined in the scheduling $\mathcal{S}(n)$, where $\alpha_t = (j_{1_t}, ..., j_{m_t})$: the nodes $j_{1_t}, ..., j_{m_t}$ of the network (100) simultaneously emit respective orthogonal sequences assigned respectively to said nodes and each node $i$ of the network other than $j_{1_t}, ..., j_{m_t}$ obtains a signal from each node $j_{1_t}, ..., j_{m_t}$ on the basis of the orthogonal sequences assigned to said nodes $j_{1_t}, ..., j_{m_t}$ and estimates, on the basis of said signal from each node $j_{1_t}, ..., j_{m_t}$, the channel of the radio link from said node to $i$.

2. The method for scheduling transmissions in an ad-hoc radio communication network (100) of n nodes according to claim 1, comprising a step of transmitting said scheduling to the nodes of the network or at least one step of transmitting, to each node, the indication of its emission order associated with its identifier in accordance with said scheduling without including the indication of the cycles in which the other nodes have to emit in accordance with said scheduling.

3. The method for scheduling transmissions in an ad-hoc radio communication network (100) of $n$ nodes according to claim 1 or 2, comprising a step of evaluating the interference contributed by a node $k$ on a radio link from a node $j$ to a node $i$, where $i$, respectively $j$, respectively $k \in [1, n]$ and $k \neq i, j$, according to which:

- based on said channel estimates, the node $i$ determines the statistical parameters of the channel of the radio link from the node $j$ to the node $i$, represented by the notation $j \rightarrow i$, for all nodes $j \neq i$;
- based on the determined statistical parameters of the channel of the radio links, calculating, in the nodes, the probabilities $P(\text{SINR}_{j \rightarrow i,k} > \Gamma_0)$, that is to say the probability of the signal-to-noise plus interference ratio in reception mode of the node i for a payload transmission from the node $j$ to the node $i$, with the node k as interferer, being greater than a fixed threshold $\Gamma_0$.

4. The method for scheduling transmissions in an ad-hoc radio communication network (100) of $n$ nodes according to the preceding claim, according to which an interference graph is created by a node by implementing the following steps:

- identifying the interferences satisfying the condition $P(\text{SINR}_{j \rightarrow i,k} > \Gamma_0) < \tau_{thres}$, where $\tau_{thres}$ is a predefined threshold;
- the links corresponding to the identified interference are plotted, except for the links that do not satisfy said condition, thus defining the edges of the graph;

- a weight is assigned to each edge thus defined corresponding to an interfering link, with a view to reducing the effect of the interference originating from a node $k$ of a transmission $j \rightarrow i$ on the basis of said weight: for a transmission $j \rightarrow i$, the weight of the interfering link $k \rightarrow i$ is $w_{ik} = P(\text{SINR}_{j \rightarrow i,k} < \Gamma_0)$.

5. An ad-hoc radio communication network (100) of n nodes of index 1, ..., $n$ adapted for exchanging on a common radio communication channel, said network comprising a device (10) for scheduling transmissions in said ad-hoc radio communication network (100, said device (10) being adapted to determine a transmission scheduling $\mathcal{S}(n)$ in cycles such that $\mathcal{S}(n) = \{\alpha_1, \alpha_2, \alpha_3 ... \}$, where the cycle $t$ comprises the action $\alpha_t$ corresponding to: "the $m_t$ nodes of index $j_{1_t}, ..., j_{m_t}$ of the network emit simultaneously to cycle $t$", represented by the expression $\alpha_t = (j_{1_t}, ..., j_{m_t})$, so that each node receives a transmission from each of the other nodes at the end of the scheduling;

a node being adapted to emit to all of the other nodes and a node being adapted so as not to be able to emit and receive at the same time;
said device (10) being adapted, in a first phase, initially considering the network of n nodes, to determine the action $\alpha_1$ of the first cycle such that $\alpha_1 = \left( 1, ..., \left\lceil \frac{n}{2} \right\rceil \right)$ and the action $\alpha_2$ of the second cycle such that $\alpha_2 = \left( \left\lceil \frac{n}{2} \right\rceil + 1, ..., n \right)$ where $\left\lceil \frac{n}{2} \right\rceil$ is the upper integer part of $n/2$), and then to iterate the operation, but on the subnetwork of nodes $\{ 1, ..., \left\lceil \frac{n}{2} \right\rceil \}$ of size $\left\lceil \frac{n}{2} \right\rceil$ instead of the initial network of $n$ nodes, on the one hand, the device thus determining the emissions of a first cycle and of a second cycle for this subnetwork of nodes and to also iterate the previous operation on the subnetwork of nodes $\{ \left\lceil \frac{n}{2} \right\rceil + 1, ..., n \}$ of size $\left\lfloor \frac{n}{2} \right\rfloor$ instead of the initial network of $n$ nodes, thereby determining the emissions of a first cycle and a second cycle for this subnetwork of nodes; the device is adapted to determine the action $\alpha_3$ of $\mathcal{S}(n)$ as the grouping of the emissions of the first cycles determined for the two subnetworks and to determine the action $\alpha_4$ of $\mathcal{S}(n)$ as the grouping of the emissions of the second cycles determined for the two subnetworks; and
the device (10) is adapted, as long as the size of the subnetworks is greater than a threshold Pmin, to repeat these steps recursively, so as thus to determine, at the end of the $r^{th}$ iteration, the action $\alpha_{2r-1}$ of $\mathcal{S}(n)$ as the grouping of the emissions of the first cycles determined for the $2^{r-1}$ subnetworks under consideration and the action $\alpha_{2r}$ of $\mathcal{S}(n)$ as the grouping of the emissions of the second cycles determined for said $2^{r-1}$ subnetworks; and
the device (10) is adapted, when the size $n'$ of the subnetworks under consideration becomes less than or equal to a fixed threshold Pmin, the actions $\alpha_1, ..., \alpha_T$, of $\mathcal{S}(n)$ then having been determined, in a second phase, to determine, for each of the N' subnetworks under consideration of size $n'$, N' being the number of subnetworks under consideration, a transmission scheduling that satisfies the following rules:

in this scheduling, each node of the subnetwork under consideration has to emit during exactly two cycles; and when 2 nodes emit at the same time in the same cycle, these may not emit again at the same time in the other cycle;
with $\{\beta_{j1}, ..., \beta_{jL}\}$ being the scheduling thus obtained for each subnetwork $j$, $j$ = 1 to N', where L = $L = \left\lceil \frac{1 + \sqrt{1 + 8n'}}{2} \right\rceil$, then for k = 1 to L, the device (10) is adapted to determine the action $\alpha_{T'+k}$ of $\mathcal{S}(n)$ as the grouping, from j=1 to N', of the actions $\beta_{jk}$, with:

$$\alpha_{T'+1} = \{\beta_{11}, ..., \beta_{N'1}\} \; ; \; \alpha_{T'+2} = \{\beta_{12}, ..., \beta_{N'2}\} \; ; \; ... \; ; \; \alpha_{T'+L} = \{\beta_{1L}, ..., \beta_{N'L}\};$$

the transmission scheduling resulting from the determination operation being

$$\mathcal{S}(\mathrm{n}) = \{\alpha_1, \alpha_2, \alpha_3 ..., \alpha_{T'}, \alpha_{T'+1}, ..., \alpha_{T'+L}\},$$

said communication network (100) being adapted to successively implement the actions $\alpha_t$ and wherein, in each cycle t, $t = 1$ to T'+L defined in the scheduling $\mathcal{S}(n)$, with $\alpha_t = (j_{1_t}, ..., j_{m_t})$, the nodes $j_{1_t}, ..., j_{m_t}$ of the network are adapted to simultaneously emit respective orthogonal sequences assigned respectively to said nodes and each node i of the network other than $j_{1_t}, ..., j_{m_t}$ is adapted to obtain a signal from each node $j_{1_t}, ..., j_{m_t}$ on the basis of the orthogonal sequences assigned to said nodes $j_{1_t}, ..., j_{m_t}$ and estimate, on the basis of said signal from each node $j_{1_t}, ..., j_{m_t}$, the channel of the radio link from said node to $i$.

6. The ad-hoc network (100) of nodes according to claim 5, wherein, based on said channel estimates, the node i is adapted to determine the statistical parameters of the channel of the radio link from the node $j$ to the node $i$, represented by the notation $j \rightarrow i$, for all nodes $j \neq i$ and to calculate, based on the determined statistical parameters of the channel of the radio links, the probabilities $P(\mathrm{SINR}_{j \rightarrow i,k} > \Gamma_0)$, that is to say the probability of the signal-to-noise plus interference ratio in reception mode of the node $i$ for a payload transmission from the node $j$ to the node $i$, with the node k as interferer, being greater than a fixed threshold $\Gamma_0$.

FIG.1

FIG.2

FIG.3

EP 4 203 591 B1

FIG.4

EP 4 203 591 B1

FIG.5

FIG.6

FIG.7

FIG.8

FIG.9

EP 4 203 591 B1

FIG.10

FIG.11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017111905 A1

- FR 3075548 B1, X. Leturc

**Littérature non-brevet citée dans la description**

- **SASTRY KOMPELLA et al.** On optimal SINR-based scheduling in multihop wireless networks. IEEE, 01 Décembre 2010
- **S. A. JAFAR.** Topological interférence Management Through Index Coding. *IEEE Transactions on Information Theory,* Janvier 2014, vol. 60 (1), 529-568
- **X. LETURC ; P. CIBLAT ; C. J. LE MARTRET.** Estimation of the Ricean K-factor from noisy complex channel coefficients. *2016 50th Asilomar Conférence on Signais, Systems and Computers,* 2016, 1092-1096
- **X. LETURC et al.** Estimation of the Ricean K Factor in the Presence of Shadowing. *IEEE Communications Letters,* Janvier 2020, vol. 24 (1), 108-112
- **YOUNG-CHAI KO ; M. -. ALOUINI.** Estimation of Nakagami-m fading channel parameters with application to optimized transmitter diversity systems. *IEEE Transactions on Wireless Communications,* Mars 2003, vol. 2 (2), 250-259

- **V. M. DASILVA ; E. S. SOUSA.** Multicarrier orthogonal CDMA signais for quasisynchronous communication systems. *IEEE Journal on Selected Areas in Communications,* Juin 1994, vol. 12 (5), 842-852
- **K. CHOI ; H. LIU.** Polyphase Scrambled Walsh Codes for Zero-Correlation Zone Extension in QS-CDMA. *IEEE Communications Letters,* Avril 2012, vol. 16 (4), 429-431
- **J. -. VAN DE BEEK ; O. EDFORS ; M. SANDELL ; S. K. WILSON ; P. O. BORJESSON.** On channel estimation in OFDM systems. *1995 IEEE 45th Vehicular Technology Conférence. Countdown to the Wireless Twenty-First Century,* 1995, vol. 2, 815-819
- **J. GAVEAU ; C. J. LE MARTRET ; M. ASSAAD.** Grouping of subcarriers and effective SNR statistics in wideband OFDM systems using EESM. *2017 IEEE 13th International Conférence on Wireless and Mobile Computing, Networking and Communications (WiMob),* 2017, 1-7
- **J. CAO et al.** Resource Allocation for Ultradense Networks With Machine-Learning-Based Interférence Graph Construction. *IEEE Internet of Things Journal,* Mars 2020, vol. 7 (3), 2137-2151